(19) Europäisches Patentamt
European Patent Office
Office européen des brevets

(11) **EP 4 350 517 A1**

(12) **EUROPÄISCHE PATENTANMELDUNG**

(43) Veröffentlichungstag:
**10.04.2024  Patentblatt 2024/15**

(21) Anmeldenummer: 23201000.9

(22) Anmeldetag: **29.09.2023**

(51) Internationale Patentklassifikation (IPC):
***G06F 11/00*** *(2006.01)*   ***G06F 11/07*** *(2006.01)*

(52) Gemeinsame Patentklassifikation (CPC):
**G06F 11/004; G06F 11/0754;** G06F 2201/81

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(30) Priorität: **30.09.2022  DE 102022125396**

(71) Anmelder: **Bundesdruckerei GmbH
10969 Berlin (DE)**

(72) Erfinder:
• **Wilke, Andreas
  13507 Berlin (DE)**
• **Fabian, David
  13465 Berlin (DE)**
• **Kunaht-Huhsmann, Neele
  10245 Berlin (DE)**
• **Schleich, Wolfgang
  89081 Ulm (DE)**

(74) Vertreter: **Richardt Patentanwälte PartG mbB
Wilhelmstraße 7
65185 Wiesbaden (DE)**

(54) **VORHERSAGE EINES WIEDERHOLTEN AUFTRETENS EINER FUNKTIONSSTÖRUNG**

(57)    Die Erfindung betrifft ein Verfahren zur Vorhersage eines wiederholten Auftretens einer Funktionsstörung (110) eines Computersystems (100, 130, 160, 198) unter Verwendung von protokollierten Log-Daten (122, 152, 182, 196) des Computersystems (100, 130, 160, 198). Das Verfahren umfasst ein Protokollieren von Log-Daten (122, 152, 182, 196), ein Ausführen einer Anomalieanalyse auf ein Auftreten der Funktionsstörung (110) des Computersystems (100, 130, 160, 198) hin, ein Identifizieren von Betriebsparametern (112), deren Werte von ein oder mehreren bestimmten Anomalien umfasst sind, und ein Überwachen der für die identifizierten Betriebsparameter (112) in den Log-Datensätzen protokollierten Werte, wobei das Überwachen ein Vorhersagen eines bevorstehenden wiederholten Auftretens der Funktionsstörung (110) umfasst

Fig. 8

EP 4 350 517 A1

**Beschreibung**

Die Erfindung betrifft ein Verfahren zur Vorhersage eines wiederholten Auftretens einer Funktionsstörung eines Computersystems, ein Computersystem zur Vorhersage des wiederholten Auftretens der Funktionsstörung sowie ein verteiltes Computersystem, welches ein entsprechendes Computersystem zur Vorhersage des wiederholten Auftretens der Funktionsstörung als Server umfasst.

Im Zuge der zunehmenden Digitalisierung, Automatisierung und Vernetzung in allen Lebens- und Arbeitsbereichen werden hierfür verwendete Datenverarbeitungssystem immer komplexer und die zu verarbeiteten Datenmengen immer größer. Dies führt dazu, dass die entsprechend Systeme fehleranfälliger werden. Funktionsstörungen, welche die Leistung der Systeme negativ beeinflussen, können einem Zusammenspiel unterschiedlicher Einflussfaktoren unterliegen und sind insbesondere bei lediglich sporadischem Auftreten nur schwer nachzustellen. Mithin kann sich die Fehlerdiagnose und folglich die Fehlerprävention schwierig gestalten. Dennoch können die entsprechenden Fehler aber weitreichende Folgen für das System haben, wenn sie auftreten.

Der Erfindung liegt die Aufgabe zugrunde, ein verbessertes Verfahren zur Vorhersage eines wiederholten Auftretens einer Funktionsstörung zu schaffen.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zur Vorhersage eines wiederholten Auftretens einer Funktionsstörung eines Computersystems unter Verwendung von protokollierten Log-Daten des Computersystems. Das Verfahren umfasst:

- Protokollieren von Log-Daten, wobei das Protokollieren der Log-Daten ein Speichern von Log-Datensätzen in einer Datenbank umfasst, wobei die Log-Datensätze während des Betriebes des Computersystems erfasste Werte zu einer Mehrzahl von Betriebsparametern des Computersystems umfassen, wobei die Log-Datensätze ferner jeweils eine Zeitangabe umfassen, welche angibt, wann die protokollierten Werte erfasst wurden,
- auf ein Auftreten der Funktionsstörung des Computersystems hin, Ausführen einer Anomalieanalyse, wobei die Anomalieanalyse ein Bestimmen von ein oder mehreren Anomalien innerhalb erster Log-Datensätze der protokollierten Log-Datensätze umfasst, deren protokollierte Werte innerhalb eines der Funktionsstörung unmittelbar vorangehenden vordefinierten ersten Zeitintervalls erfasst wurden, wobei die Anomalien jeweils eine Kombination von Werten von Betriebsparametern des Computersystems sind, für welche sich ein erster Unterschied in einer ersten Wahrscheinlichkeit eines Auftretens der entsprechenden Werte innerhalb der ersten Log-Datensätze mindestens um einen vordefinierten Größenwert von einem zweiten Unterschied in einer zweiten Wahrscheinlichkeit eines Auftretens der entsprechenden Werte innerhalb von zweiten Log-Datensätze der protokollierten Log-Datensätze unterscheidet, deren Werte in einem vordefinierten zweiten Zeitintervall erfasst wurden,
- Identifizieren derjenigen Betriebsparameter des Computersystems, deren Werte von den bestimmten ein oder mehreren Anomalien umfasst sind,
- Überwachen der für die identifizierten Betriebsparameter des Computersystems in den Log-Datensätzen protokollierten Werte, wobei das Überwachen ein Vorhersagen eines bevorstehenden wiederholten Auftretens der Funktionsstörung umfasst, falls Werte für die identifizierten Betriebsparameter des Computersystems innerhalb eines vordefinierten dritten Zeitintervalls erfasst werden, für welche sich ein dritter Unterschied in einer dritten Wahrscheinlichkeit eines Auftretens der entsprechenden Werte innerhalb von dritten Log-Datensätzen der protokollierten Log-Datensätze, deren protokollierte Werte innerhalb des vordefinierten dritten Zeitintervalls erfasst werden, mindestens um den vordefinierten Größenwert von dem zweiten Unterschied in der zweiten Wahrscheinlichkeit des Auftretens der entsprechenden Werte innerhalb der zweiten Log-Datensätze unterscheidet.

Ausführungsformen können den Vorteil haben, dass basierend auf der Anomalieanalyse Betriebsparameter identifiziert werden können, deren Werte von ein oder mehreren Anomalien umfasst werden, welche einer Fehlfunktion vorausgehen. Da es sich um Anomalien handelt, d.h. um Kombinationen von Werten, deren relative Wahrscheinlichkeit im Falle einer Funktionsstörung deutlich abweicht von ihrer üblichen relativen Wahrscheinlichkeit, können diese Anomalien als ein Indiz für ein bevorstehendes wiederholtes, d.h. erneutes, Auftreten der Funktionsstörung verwendet werden. Die Unterschiede in den Wahrscheinlichkeiten sind ein Maß für eine Korrelation zwischen den betrachteten Werten der Betriebsparameter. Je geringer der Unterschied, desto mehr entsprechen sich die Wahrscheinlichkeitsverteilungen der entsprechenden Werte und desto höher ist der Grad der Korrelation. Betrachtet werden nun Änderungen in diesem Grad der Korrelation. Es wird untersucht, ob der Grad der Korrelation vor einer Funktionsstörung signifikant zu- oder abnimmt. Es wird dabei nach ein oder mehreren Kombinationen von Betriebsparametern gesucht, für deren Werte sich eine Korrelation vor dem Auftreten einer Funktionsstörung signifikant ändert und die damit als Indikator für die bevorstehende Funktionsstörung dienen können. Die identifizierten Betriebsparameter werden der Funktionsstörung bzw. einem Identifikator derselben zugeordnet. Die resultierende Zuordnung wird beispielsweise gespeichert und als Vergleichsdatensatz für ein Vorhersagen eines bevorstehenden wiederholten Auftretens der Funktionsstörung verwendet.

Zunächst werden im Zuge einer Anomalieanalyse beispielsweise diejenigen Betriebsparameter identifiziert, deren Unterschied in den Wahrscheinlichkeiten eine Anomalie in einem einer Funktionsstörung unmittelbar vorangehenden vordefinierten Zeitintervall aufweist. Eine Anomalie liegt vor, wenn die für das der Funktionsstörung unmittelbar vorangehende vordefinierte Zeitintervall bestimmte Korrelation signifikant von einer Referenzkorrelation bzw. Referenzwahrscheinlichkeiten eines Referenzzeitintervalls abweicht, d.h. der Unterschied größer oder gleich einem vordefinierten Größenwert ist.

Bei dem zweiten Unterschied in der zweiten Wahrscheinlichkeit des Auftretens der entsprechenden Werte innerhalb von zweiten Log-Datensätze der protokollierten Log-Datensätze, deren Werte in dem vordefinierten zweiten Zeitintervall erfasst wurden, handelt es sich um eine solche Referenzwahrscheinlichkeit für das Auftreten der entsprechenden Werte innerhalb von Referenz-Log-Datensätze eines Referenzzeitintervalls.

Die Länge des Referenzzeitintervalls, dessen Referenz-Log-Datensätze zum Bestimmen der Referenzwahrscheinlichkeit verwendet werden, entspricht beispielsweise der Länge des Zeitintervalls für welchen die Unterschiede verglichen werden, zum Beispiel dem ersten oder dritten Zeitintervall. Beispielsweise ist die Länge des Referenzzeitintervalls, dessen Referenz-Log-Datensätze zum Bestimmen der Referenzwahrscheinlichkeit verwendet werden, größer als die Länge des Zeitintervalls für welchen die Unterschiede verglichen werden, zum Beispiel dem ersten oder dritten Zeitintervall.

Beispielsweise handelt es sich bei der Referenzwahrscheinlichkeit um eine Durchschnittswahrscheinlichkeit, etwa einem Mittelwert der Wahrscheinlichkeiten, für Referenz-Log-Datensätze einer Mehrzahl von Referenzzeitintervallen. Die Längen der Referenzzeitintervalle sind beispielsweise identisch oder größer als die Länge des Zeitintervalls für welchen die Unterschiede verglichen werden, zum Beispiel dem ersten oder dritten Zeitintervall.

Ausführungsformen können den Vorteil haben, dass anhand der Anomalieanalyse Betriebsparameter des Computersystems ermittelt werden können, bei deren Werten im Vorfeld eines Auftretens der Funktionsstörung Anomalien auftreten. Mit anderen Worten kann bestimmt werden, welche Anomalien innerhalb der in den Log-Datensätzen protokollierten Log-Daten vor der Funktionsstörung auftreten, die sonst nicht auftreten und mithin für eine Vorhersage der entsprechenden Funktionsstörung mit einer hohen Wahrscheinlichkeit geeignet sind.

Beispielsweise wird für die Anomalieanalyse eine einzige Funktionsstörung herangezogen, d.h. die ersten Log-Datensätze umfassen ausschließlich protokollierte Log-Datensätze, deren protokollierte Werte innerhalb eines der Funktionsstörung unmittelbar vorangehenden vordefinierten ersten Zeitintervalls erfasst wurden. Beispielsweise wird für die Anomalieanalyse eine Mehrzahl von Funktionsstörungen herangezogen. Bei den herangezogenen Funktionsstörungen handelt es sich beispielsweise um identische oder ähnliche Funktionsstörungen. In diesem Fall wird beispielsweise eine Mehrzahl von ersten Zeitintervallen, d.h. Funktionsstörungen der Mehrzahl von Funktionsstörungen jeweils unmittelbar vorangehende vordefinierte erste Zeitintervalle, berücksichtigt. Dabei umfassen die ersten Log-Datensätze dann protokollierte Log-Datensätze, deren protokollierte Werte innerhalb eines der ersten Zeitintervalle der Mehrzahl von ersten Zeitintervallen erfasst wurden.

Log-Daten oder auch Protokolldaten bezeichnen automatisch protokollierte Daten aller oder bestimmter Betriebsparameter eines Computersystems, wie etwa Zustandsparameter des Computersystems oder Aktionen von Prozessen auf einem Computersystem. So werden beispielsweise alle Aktionen protokolliert, welche für eine spätere Analyse erforderlich sind oder sein könnten. Beispielsweise umfassen die entsprechenden Log-Daten neben der protokollierten Aktion einen Zeitstempel mit Datum und Uhrzeit. Die Zeitstempel dienen beispielsweise als Zeitangabe der Erfassung der von den protokollierten Log-Daten umfassten Werte für die Betriebsparameter des Computersystems.

Die Log-Daten protokollieren beispielsweise Betriebsparameter, etwa Zustandsparameter, des Computersystems in Form von Fehler, Warnungen und Infos. Bei Fehlern (engl. "Errors") handelt es sich um Laufzeitfehler, welcher die Funktion einer Anwendung behindert, oder um unerwarteter Programmfehler. Schwerwiegende Fehler, welche zu eine zur Terminierung einer Anwendung führt werden auch als "Fatals" bezeichnet. Warnungen (engl. "Warnings") umfassen beispielsweise Aufrufe veralteter Schnittstellen, fehlerhafte Aufrufe von Schnittstellen, Benutzerfehler oder ungünstige Programmzustände. Infos umfassen beispielsweise Laufzeitinformationen wie den Start und Stopp einer Anwendung, Benutzeranmeldungen und -abmeldungen oder Datenübertragungen.

Die ein oder mehreren Anomalien in den identifizierten Betriebsparametern des Computersystems werden beispielsweise der Funktionsstörung zugeordnet und die identifizierten Betriebsparameter werden zur weiteren Überwachung der protokollierten Log-Daten verwendet. Im Zuge der Überwachung der Log-Daten werden nachfolgend protokollierte Log-Daten daraufhin überprüft, ob in diesen identifizierten Betriebsparametern wieder entsprechende Anomalien auftreten. Entsprechende Anomalien liegen vor, wenn Werte für die identifizierten Betriebsparameter des Computersystems innerhalb eines vordefinierten Zeitintervalls erfasst werden, für welche sich ein Unterschied in der Wahrscheinlichkeit des Auftretens der entsprechenden Werte innerhalb des entsprechenden Zeitintervalls, mindestens um den vordefinierten Größenwert von einem Referenzunterschied in der Referenzwahrscheinlichkeit des Auftretens der entsprechenden Werte innerhalb von Referenz-Log-Datensätze eines Referenzzeitintervalls unterscheidet.

Im Zuge der Anomalieanalyse und/oder des Überwachens von Log-Daten können beispielsweise diskrete Werte der Betriebsparameter verwendet werden, wie sie in den Log-Datensätzen für die betrachteten Betriebsparameter protokolliert sind. Im Zuge der Anomalieanalyse und/oder des Überwachens von Log-Daten können beispielsweise Werteintervalle, in welche die Werte der Betriebsparameter fallen, verwendet werden. Beispielsweise wird ein in den Log-Datensätzen für einen betrachteten Betriebsparameter protokollierter Wert einem Werteintervall zugeordnet und das entsprechende Werteintervall wird der Anomalieanalyse und/oder dem Überwachen der Log-Daten zugrunde gelegt. Nach Ausführungsformen kann es sich bei Wahrscheinlichkeiten für ein Auftreten von Werten von Betriebsparametern in Log-Datensätzen beispielsweise um Wahrscheinlichkeiten für ein Auftreten von diskreten Werten handeln. Zur Bestimmung der Wahrscheinlichkeiten werden beispielsweise diejenigen Log-Datensätze in einem vordefinierten Zeitintervalle $\Delta t_i$ berücksichtigt, welche den entsprechenden diskreten Wert für einen bestimmten Betriebsparameter umfassen. Nach Ausführungsformen kann es sich bei Wahrscheinlichkeiten für ein Auftreten von Werten von Betriebsparametern in Log-Datensätzen beispielsweise um Wahrscheinlichkeiten für ein Auftreten von Werten handeln, welche von einem bestimmten Werteintervall umfasst sind. Zur Bestimmung der Wahrscheinlichkeiten werden beispielsweise diejenigen Log-Datensätze in einem vordefinierten Zeitintervalle $\Delta t_i$ berücksichtigt, welche für einen bestimmten Betriebsparameter jeweils einen Wert umfassen, der von dem entsprechenden Werteintervall umfasst sind.

Wird ein Auftreten ein oder mehrerer entsprechender Anomalien für Werte der identifizierten Betriebsparameter erfasst, kann dies als Trigger zur Vorhersage eines bevorstehenden wiederholten, d.h. erneuten, Auftretens der Funktionsstörung verwendet werden. Um das entsprechende Auftreten zu verhindern können beispielsweise ein oder mehrere vordefinierte Gegenmaßnahmen eingeleitet werden.

Die Länge des Referenzzeitintervalls, dessen Referenz-Log-Datensätze zum Bestimmen der Referenzwahrscheinlichkeit verwendet werden, entspricht beispielsweise der Länge des Zeitintervalls für welchen die Unterschiede verglichen werden, zum Beispiel dem ersten oder dritten Zeitintervall. Beispielsweise ist die Länge des Referenzzeitintervalls, dessen Referenz-Log-Datensätze zum Bestimmen der Referenzwahrscheinlichkeit verwendet werden, größer als die Länge des Zeitintervalls für welchen die Unterschiede verglichen werden, zum Beispiel dem ersten oder dritten Zeitintervall.

Beispielsweise handelt es sich bei der Referenzwahrscheinlichkeit um eine Durchschnittswahrscheinlichkeit, etwa einem Mittelwert der Wahrscheinlichkeiten, für Referenz-Log-Datensätze einer Mehrzahl von Referenzzeitintervallen. Die Längen der Referenzzeitintervalle sind beispielsweise identisch oder größer als die Länge des Zeitintervalls für welchen die Unterschiede verglichen werden, zum Beispiel dem ersten oder dritten Zeitintervall.

Nach Ausführungsformen kann ein Auftreten ein oder mehrerer Anomalien in den überwachten Log-Datensätzen als Trigger zur Vorhersage eines bevorstehenden wiederholten Auftretens der Funktionsstörung verwendet werden. Beispielsweise kann ein Auftreten ein oder mehrerer der entsprechenden Anomalien verwendet werden, um das bevorstehende wiederholte Auftreten der Funktionsstörung möglichst frühzeitig vorhersagen zu können.

Beispielsweise wird das erste Zeitintervall, dessen protokollierte Log-Datensätze zur Anomalieanalyse verwendet werden, variiert. Beispielsweise wird zunächst ein vordefiniertes Zeitintervall, welches der Funktionsstörung unmittelbar vorangeht, herangezogen. Dieses Zeitintervall kann dann beispielsweise verlängert oder verkürzt werden und/oder von der Funktionsstörung in der Zeit zurückverschoben werden, bis eine oder mehrere Anomalien aufgefunden werden deren Wahrscheinlichkeitsunterschiede gegenüber dem Referenzzeitintervall ausreichenden groß ist, d.h. mindestens den vordefinierten Größenwert aufweist.

Ausführungsformen können den Vorteil haben, dass sie ein effektives Vorhersagen eines wiederholten Auftretens von Funktionsstörungen ermöglichen.

Unter einer Funktionsstörung wird hier eine Störung des bestimmungsgemäßen Betriebes eines Computersystems verstanden. Bestimmungsgemäßer Betrieb ist der Betrieb, für welchen das Computersystem technisch ausgelegt und welchen es unter normal Bedingungen erreicht. Betriebsparameter, welche den bestimmungsgemäßen Betrieb bzw. Regelbetrieb des Computersystems beschreiben umfassen beispielsweise Leistungsparameter, wie etwa Instruktionen pro Zyklus, Instruktionen pro Sekunde, Geleitkommaoperationen pro Sekunde, Datenübertragungsrate, Datendurchsatz, Antwortzeit, Antwortrate, Bilder pro Sekunde, Prozessortakt, Latenzzeit oder Zugriffszeit. Ferner umfassen die Betriebsparameter zur Verfügung stehende Software und Hardware sowie physikalische Zustandsparameter, wie etwa Temperaturen von Komponenten. Funktionsstörung können je nach Komplexität des Systems sehr unterschiedliche Formen annehmen und umfassen beispielsweise Fehlfunktion, wie etwa Software- oder Hardwarefehler, ebenso wie Abweichungen von den bestimmungsgemäßen Betriebsparametern.

Nach Ausführungsformen handelt es sich bei den Kombinationen von Werten jeweils um Wertepaare. Beispielsweise umfassen die Anomalien jeweils Wertepaare, d.h. zwei Werte für zwei Betriebsparameter des Computersystems. Bei dem Unterschied in den Wahrscheinlichkeiten des Auftretens der Werte eines Wertepaars handelt es sich beispielsweise um eine Differenz zwischen den Wahrscheinlichkeiten für die einzelnen Werte des entsprechenden Wertepaars. Diese Differenz wird beispielsweise in Bezug auf das Auftreten in einem vordefinierten Zeitintervall, etwa das erste oder dritte Zeitintervall, berechnet und mit der entsprechenden Differenz für ein Referenzzeitintervall, d.h. einer Referenzdifferenz, verglichen. Falls ein Unterschied zwischen diesen Differenzen größer oder gleich einem vor-

definierten Größenwert ist, liegt eine Anomalie vor.

Ausführungsformen können den Vorteil haben, dass ein effektiver und effizienter Ansatz zum Bestimmen von Anomalien in beliebigen Datensätzen bereitgestellt wird.

Die Betriebsparameter werden beispielsweise als diskrete Zufallsvariablen betrachtet, welche gemäß der Anzahl des Auftretens der ihnen zugeordneten Werte in den Log-Datensätzen verteilt sind. Die Wahrscheinlichkeit, dass ein Betriebsparameter $X$ den Wert $x$ annimmt, ist:

$$p(X = x) = \frac{|I_X(x)|}{N}.$$

Dabei ist N die Gesamtzahl an Log-Datensätze, welche beispielsweise jeweils anhand einer zugeordneten "ID", d.h. einem zugeordneten Identifikator, eindeutig identifizierbar sind.

Nach Ausführungsformen ist der Unterschied in der Wahrscheinlichkeit eines Auftretens eines ersten Werts $x_0$ eines ersten Betriebsparameters X eines Wertepaars und eines zweiten Werts $y_0$ eines zweiten Betriebsparameters Y des Wertepaars innerhalb der Log-Datensätze eines der vordefinierten Zeitintervalle $\Delta t_i$ definiert als

$$\frac{1}{2}\|p_{Z|X=x_0} - p_{Z|Y=y_0}\|_1 = \frac{1}{2} \cdot \sum_Z \sum_{z \in V(Z)} |p_{Z|X=x_0}(z) - p_{Z|Y=y_0}(z)|.$$

Die Summation läuft über alle weiteren, d.h. über dritte Betriebsparameter Z und deren Werte, d.h. über alle dritten Werte z, welche für die entsprechenden weiteren Betriebsparameter Z innerhalb der Log-Datensätze der Datenbank protokolliert sind. V(Z) ist die Menge aller protokollierter dritter Werte z der dritten Betriebsparameter Z. Der Faktor ½ dient der Normalisierung, um sicherzustellen, dass die Wahrscheinlichkeitsdifferenz zwischen 0 und 1 liegt. Nach alternativen Ausführungsformen können für den Faktor auch andere Werte verwendet werden.

Eine Wahrscheinlichkeit eines Auftretens eines bestimmten dritten Werts z aus der Menge der dritten Werte eines weiteren dritten Betriebsparameters Z aus der Menge der dritten Betriebsparameter, über welche summiert wird, in Kombination mit dem ersten Wert $x_0$ des ersten Betriebsparameters X ist definiert als

$$p_{Z|X=x_0}(z) = \frac{\left|I_Z(z) \cap I_X^{\Delta t_i}(x_0)\right|}{\left|I_X^{\Delta t_i}(x_0)\right|}.$$

$I_X^{\Delta t_i}(x_0)$ ist die Menge der Log-Datensätze des entsprechenden vordefinierten Zeitintervalls $\Delta t_i$, welche den ersten Wert $x_0$ für den ersten Betriebsparameter X umfassen. $I_Z(z)$ ist die Menge der Log-Datensätze der Datenbank, welche den dritten Wert z für den weiteren dritten Betriebsparameter Z umfassen. Die Schnittmenge $I_Z(z) \cap I_X^{\Delta t_i}(x_0)$ ist somit die Menge aller Log-Datensätze des vordefinierten Zeitintervalls $\Delta t_i$, welche sowohl den bestimmten dritten Wert z des weiteren dritten Betriebsparameters Z, als auch den ersten Wert $x_0$ des ersten Betriebsparameters X umfassen.

Eine Wahrscheinlichkeit eines Auftretens eines bestimmten dritten Werts z aus der Menge der dritten Werte eines weiteren dritten Betriebsparameters Z aus der Menge der dritten Betriebsparameter, über welche summiert wird, in Kombination mit dem zweiten Wert $y_0$ des zweiten Betriebsparameters Y ist definiert als

$$p_{Z|Y=y_0}(z) = \frac{\left|I_Z(z) \cap I_Y^{\Delta t_i}(y_0)\right|}{\left|I_Y^{\Delta t_i}(y_0)\right|}.$$

$I_Y^{\Delta t_i}(y_0)$ ist die Menge der Log-Datensätze des entsprechenden vordefinierten Zeitintervalls $\Delta t_i$ ist, welche den zweiten Wert $y_0$ für den zweiten Betriebsparameter Y umfassen. Die Schnittmenge $I_Z(z) \cap I_Y^{\Delta t_i}(y_0)$ ist somit die Menge aller Log-Datensätze des vordefinierten Zeitintervalls $\Delta t_i$, welche sowohl den bestimmten dritten Wert z des weiteren dritten Betriebsparameters Z, als auch den zweiten Wert $y_0$ des zweiten Betriebsparameters Y umfassen.

Nach Ausführungsformen kann es sich bei den vorgenannten Wahrscheinlichkeiten für ein Auftreten von Werten von Betriebsparametern in den Log-Datensätzen beispielsweise um Wahrscheinlichkeiten für ein Auftreten von bestimmten diskreten Werten handeln. Beispielsweise umfasst ein Log-Datensatz einen Wert $x_0$ für einen Betriebsparameter X, wenn der entsprechende Log-Datensatz den diskreten Wert $x_0$ für den Betriebsparameter X identisch umfasst. Beispielsweise umfasst ein Log-Datensatz einen Wert $y_0$ für einen Betriebsparameter Y, wenn der entsprechende Log-Datensatz den diskreten Wert $y_0$ für den Betriebsparameter Y identisch umfasst. Beispielsweise umfasst ein Log-Datensatz einen Wert z für einen Betriebsparameter Z, wenn der entsprechende Log-Datensatz den diskreten Wert z für den Betriebsparameter Z identisch umfasst.

Nach Ausführungsformen kann es sich bei den vorgenannten Wahrscheinlichkeiten für ein Auftreten von Werten von Betriebsparametern in den Log-Datensätzen beispielsweise um Wahrscheinlichkeiten für ein Auftreten von Werten aus bestimmten Werteintervallen handeln. Beispielsweise steht der Wert $x_0$ stellvertretenden für ein den Wert $x_0$ umfassendes Werteintervall, etwa ein Werteintervall $(x_1, x_2)$ von $x_1$ bis $x_2$ mit $x_0 \in (x_1, x_2)$. Beispielsweise umfasst ein Log-Datensatz in diesem Fall einen Wert $x_0$ für einen Betriebsparameter X, wenn der entsprechende Log-Datensatz irgendeinen Wert $x_i \in (x_1, x_2)$ für den Betriebsparameter X umfasst. Beispielsweise steht der Wert $y_0$ stellvertretenden für ein den Wert $y_0$ umfassendes Werteintervall, etwa ein Werteintervall $(y_1, y_2)$ von $y_1$ bis $y_2$ mit $y_0 \in (y_1, y_2)$. Beispielsweise umfasst ein Log-Datensatz in diesem Fall einen Wert $y_0$ für einen Betriebsparameter Y, wenn der entsprechende Log-Datensatz irgendeinen Wert $y_i \in (y_1, y_2)$ für den Betriebsparameter Y umfasst. Beispielsweise steht der Wert z stellvertretenden für ein den Wert z umfassendes Werteintervall, etwa ein Werteintervall $(z_1, z_2)$ von $z_1$ bis $z_2$ mit $z \in (z_1, z_2)$. Beispielsweise umfasst ein Log-Datensatz in diesem Fall einen Wert z für einen Betriebsparameter Z, wenn der entsprechende Log-Datensatz irgendeinen Wert $z_i \in (z_1, z_2)$ für den Betriebsparameter Z umfasst.

Zur Bestimmung der Wahrscheinlichkeiten werden beispielsweise diejenigen Log-Datensätze in einem vordefinierten Zeitintervalle $\Delta t_i$ berücksichtigt, welche den entsprechenden diskreten Wert für einen bestimmten Betriebsparameter umfassen. Nach Ausführungsformen kann es sich bei Wahrscheinlichkeiten für ein Auftreten von Werten von Betriebsparametern in Log-Datensätzen beispielsweise um Wahrscheinlichkeiten für ein Auftreten von Werten handeln, welche von einem bestimmten Werteintervall umfasst sind. Zur Bestimmung der Wahrscheinlichkeiten werden beispielsweise diejenigen Log-Datensätze in einem vordefinierten Zeitintervalle $\Delta t_i$ berücksichtigt, welche für einen bestimmten Betriebsparameter jeweils einen Wert umfassen, der von dem entsprechenden Werteintervall umfasst sind.

Ausführungsformen können den Vorteil haben, dass ein effektiver und effizienter Ansatz zum Bestimmen von Anomalien in beliebigen Datensätzen bereitgestellt wird.

Eine in der zugrunde liegenden Datenmenge, d.h. in der Datenbank protokollierten Log-Datendatensätze, gespeicherte Information wird beispielsweise eindeutig identifiziert durch das Tuple (ID, K, V), wobei "ID" ein eindeutiger Identifikator eines entsprechenden Log-Datensatzes, "K" ein entsprechender Betriebsparameter und "V" ein entsprechender Wert ist. Je nach Reihenfolge, in der auf die einzelnen Komponenten des Tulpes zugegriffen wird, um im Zuge einer Datenbankoperation die entsprechende Information zu verwenden, können beispielsweise unterschiedliche Datenbanktypen identifiziert werden.

Beispielsweise handelt es sich bei der Datenbank um eine dokumentenorientierte Datenbank. In einer dokumentenorientierten Datenbank ist die Zugriffsreihenfolge beispielsweise Log-Datensatz, Betriebsparameter, Wert. Beispielsweise wird zum Auffinden eines Werts für einen Betriebsparameter nacheinander auf die Log-Datensätze zugegriffen, in diesen jeweils nach dem entsprechenden Betriebsparameter gesucht und geprüft, ob für diesen der entsprechende Wert in dem Log-Datensatz eingetragen ist. Eine dokumentenorientierte Datenbank ist eine Datenbank, bei der Dokumente die Grundeinheit zur Speicherung der Daten bilden, d.h. ein entsprechendes Datenbankmanagementsystem speichert die Inhalte der Datenbank inForm der Dokumente ab. Eine dokumentenorientierte Datenbank enthält beispielsweise eine Mehrzahl einzelner Dokumente, welchen jeweils ein eindeutiger Identifikator zugeordnet ist. Hierbei entspricht ein Dokument beispielsweise einer Zeile in einer Datenbanktabelle.

Beispielsweise handelt es sich bei der Datenbank um eine spaltenorientierte Datenbank. In einer spaltenorientierten Datenbank ist die Zugriffsreihenfolge beispielsweise Betriebsparameter, Log-Datensatz, Wert. Beispielsweise wird zunächst der Betriebsparameter identifiziert und dann werden für diesen Betriebsparameter nacheinander die in den einzelnen Log-Datensätzen protokollierten Werte geprüft. Im Falle einer spaltenorientieren Datenbank speichert ein entsprechendes Datenbankmanagementsystem die Inhalte der Datenbank beispielsweise spaltenweise physisch ab.

Beispielsweise handelt es sich bei der Datenbank um eine indexorientierte Datenbank. In einer indexorientierten Datenbank ist die Zugriffsreihenfolge beispielsweise Betriebsparameter, Wert, Log-Datensatz. Beispielsweise wird unter Verwendung eines Indexes bzw. einer Indexstruktur zunächst geprüft, ob für einen Betriebsparameter der gesuchte Wert protokolliert wurde, d.h. in den Log-Datensätzen vorkommt, und falls ja, in welchem Log-Datensatz er vorkommt. Die Indexstruktur kann den entsprechenden Log-Datensatz beispielsweise anhand seiner ID identifizieren, mit deren Hilfe dann auf den identifizierten Log-Datensatz zugegriffen werden kann. Im Falle einer indexorientierten Datenbank wird zusätzlich zu den Daten der Datenbank, d.h. der Datenstruktur, eine Indexstruktur bereitgestellt, welche beispielsweise ein Suchen nach bestimmten Inhalten der Datenbank vereinfacht und beschleunigt. So kann die Indexstruktur beispielsweise für jeden in den Log-Datensätzen vorkommenden Betriebsparameter jeweils angeben, welche Werte für den entsprechenden Betriebsparameter in den Log-Datensätzen gespeichert sind. Beispielsweise umfasst die Indexstruktur für jeden der Betriebsparameter jeweils eine Teilstruktur bzw. einen Index, welcher die für diesen Betriebsparameter in den Log-Datensätzen gespeicherten Werte auflistet. Der Index umfasst beispielsweise für jeden der Werte der Betriebsparameter jeweils einen Zeiger bzw. Verweise, etwa in Form der IDs der Log-Datensätze, der den Log-Datensatz angibt, in welchem der jeweilige Wert protokolliert ist. Nach Ausführungsformen kann dem Index ferner beispielsweise auch entnommen werden, wann die protokollierten Werte erfasst wurden. Beispielsweise ist diesen jeweils eine entsprechende Zeitangabe zugeordnet.

Dass sich die gespeicherte Information beispielsweise durch Tuple der Form (ID, K, V) eindeutig identifiziert werden, bedeutet, dass die der Anomalieanalyse zugrundeliegende Datenmenge, d.h. die Daten der in der Datenbank protokollierten Log-Datendatensätze, drei Teilmengen umfassen: die Menge der umfassten IDs der Log-Datensätze $\mathcal{J}$, die Menge der umfassten Betriebsparameter $\mathcal{K}$ und die Menge der umfassten Werte V. Mit anderen Worten umfassen die Daten D der Datenbank beispielsweise eine Kombination dieser drei Teilmengen, d.h. $D \subset \mathcal{J} \times \mathcal{K} \times \mathcal{V}$. Eine Menge von Werten, welche $k \in \mathcal{K}$ entsprechen, ist gegeben durch $V_k = \{ v \in \mathcal{V} | \exists i \in I : (i,k,v) \in D \}$. Eine Abbildung auf die IDs ist $I : \mathcal{K} \to \bigcup_{k \in \mathcal{K}} \mathrm{Map}(V_k, 2^{\mathcal{J}}), k \mapsto \left( I_k : v \mapsto \{ i \in \mathcal{J} | (i,k,v) \in D \} \right)$.

Nach Ausführungsformen ist der Unterschied in der Wahrscheinlichkeit des Auftretens des ersten Werts $x_0$ des ersten Betriebsparameters X des Wertepaars und des zweiten Werts $y_0$ des zweiten Betriebsparameters Y des Wertepaars innerhalb der Log-Datensätze eines der vordefinierten Zeitintervalle $\Delta t_i$ definiert als ein redundanzfreier Unterschied der Form:

$$\frac{1}{2} \left( \| p_{Z|X=x_0 \wedge Y=y_0} - p_{Z|X=x_0} \|_1 - \| p_{Z|X=x_0 \wedge Y=y_0} - p_{Z|Y=y_0} \|_1 \right).$$

Der Faktor ½ dient der Normalisierung, um sicherzustellen, dass die Wahrscheinlichkeitsdifferenz zwischen 0 und 1 liegt. Nach alternativen Ausführungsformen können für den Faktor auch andere Werte verwendet werden. Dabei gilt:

$$\frac{1}{2} \| p_{Z|X=x_0 \wedge Y=y_0} - p_{Z|X=x_0} \|_1 = \frac{1}{2} \cdot \sum_Z \sum_{z \in V(Z)} | p_{Z|X=x_0 \wedge Y=y_0}(z) - p_{Z|X=x_0}(z) |,$$

$$\frac{1}{2} \| p_{Z|X=x_0 \wedge Y=y_0} - p_{Z|Y=y_0} \|_1 = \frac{1}{2} \cdot \sum_Z \sum_{z \in V(Z)} | p_{Z|X=x_0 \wedge Y=y_0}(z) - p_{Z|Y=y_0}(z) |.$$

Eine Wahrscheinlichkeit eines Auftretens eines bestimmten dritten Werts z eines weiteren dritten Betriebsparameters Z aus der Menge der dritten Betriebsparameter, über welche summiert wird, in Kombination mit dem ersten Wert $x_0$ des ersten Betriebsparameters X sowie dem zweiten Wert $y_0$ des zweiten Betriebsparameters Y ist definiert als

$$p_{Z|X=x_0 \wedge Y=y_0}(z) = \frac{\left| I_Z(z) \cap I_X^{\Delta t_i}(x_0) \cap I_Y^{\Delta t_i}(y_0) \right|}{\left| I_X^{\Delta t_i}(x_0) \cap I_Y^{\Delta t_i}(y_0) \right|}.$$

$I_X^{\Delta t_i}(x_0)$ ist die Menge der Log-Datensätze des entsprechenden vordefinierten Zeitintervalls $\Delta t_i$, welche den ersten Wert $x_0$ für den ersten Betriebsparameter X umfassen. $I_Y^{\Delta t_i}(y_0)$ ist die Menge der Log-Datensätze des entsprechen-den vordefinierten Zeitintervalls $\Delta t_i$ ist, welche den zweiten Wert $y_0$ für den zweiten Betriebsparameter Y umfassen. $I_Z(z)$ ist die Menge der Log-Datensätze der Datenbank, welche den dritten Wert z für den weiteren dritten Betriebsparameter Z umfassen. Die Schnittmenge $I_Z(z) \cap I_X^{\Delta t_i}(x_0) \cap I_Y^{\Delta t_i}(y_0)$ ist somit die Menge aller Log-Datensätze des vor-definierten Zeitintervalls $\Delta t_i$, welche sowohl den bestimmten dritten Wert z des weiteren dritten Betriebsparameters Z, als auch den ersten Wert $x_0$ des ersten Betriebsparameters X und den zweiten Wert $y_0$ des zweiten Betriebsparameters Y umfassen.

Im Falle des redundanzfreien Unterschieds wird die Wahrscheinlichkeit eines Auftretens der Kombination der Werte $x_0$ und z bzw. $y_0$ und z von der Wahrscheinlichkeit eines Auftretens der Kombination der Werte $x_0$, $y_0$ und z abgezogen.

Ausführungsformen können den Vorteil haben, dass ein effektiver und effizienter Ansatz zum Bestimmen von Anomalien in beliebigen Datensätzen bereitgestellt wird.

Nach Ausführungsformen wird auf die Vorhersage des bevorstehenden wiederholten Auftretens der Funktionsstörung hin ein Warnhinweis ausgegeben. Der Warnhinweis kann beispielsweise an dem Computersystem ausgegeben werden, welches die in den Log-Datensätzen protokollierten Werte überwacht, an dem Computersystem, an welchem das wiederholte Auftreten der Funktionsstörung bevorsteht, und/oder an mehreren oder allen Einzelcomputersystemen eines verteilten Computersystems. Beispielsweise wird der Warnhinweis von dem Computersystem erstellt, welches die Überwachung der Log-Datensätze ausführt, und zum Ausgeben an ein oder mehrere weitere Computersysteme gesendet. Die Ausgabe kann beispielsweise visuell oder akustisch über eine Ausgabevorrichtung einer Benutzerschnittstelle des ausgebenden Computersystems erfolgen. Beispielsweise wird das Warnsignal visuell, etwa auf einem Display, oder akustisch, etwa über einen Lautsprecher, ausgegeben. Ausführungsformen können den Vorteil haben, dass ein oder mehrere Nutzer über das bevorstehende wiederholte Auftreten der Funktionsstörung informiert werden. Es kann mithin verhindert werden, dass die Nutzer von dem Auftreten der Funktionsstörung überrascht werden. Vielmehr können die Nutzer dadurch in die Lage versetzt werden, Maßnahmen zu ergreifen, um die bevorstehende Funktionsstörung zu verhindern und/oder abzuschwächen. Beispielsweise können sich die Nutzer auf die bevorstehende Funktionsstörung und deren Folgen einstellen.

Nach Ausführungsformen werden auszuführende Gegenmaßnahmen zur Vermeidung der Funktionsstörung festgelegt. Eine Zuordnung der auszuführenden Gegenmaßnahmen zu der Funktionsstörung wird gespeichert. Auf die Vorhersage des bevorstehenden wiederholten Auftretens der Funktionsstörung hin, werden automatisch die der Funktionsstörung zugeordneten Gegenmaßnahmen ausgeführt.

Ausführungsformen können den Vorteil haben, dass automatisch auszuführende Gegenmaßnahmen hinterlegt werden können. Somit kann eine automatisierte Störungskompensation oder Störungsbehebung bzw. Fehlerkompensation oder Fehlerkorrektur implementiert werden. Beispielsweise können Datenströme umgelenkt, Anweisungen umgelenkt oder deren Ausführung verzögert werden. Beispielsweise können zusätzliche Kapazitäten zugeschaltet und/oder Prozesse ausgelagert werden. Beispielsweise kann ein Ausführen von Anweisungen blockiert werden. Beispielsweise kann ein Ausführen bestimmter Anweisungen priorisiert werden, während ein Ausführen anderer Anweisungen zurückgestellt wird.

Nach Ausführungsformen erfolgt die Speicherung der Zuordnung der auszuführenden Gegenmaßnahmen beispielsweise durch das Computersystem. Ausführungsformen können den Vorteil haben, dass die auszuführenden Gegenmaßnahmen lokal hinterlegt werden und somit im Bedarfsfall lokal zur sofortigen Ausführung bereitstehen. Nach Ausführungsformen erfolgt die Speicherung der Zuordnung der auszuführenden Gegenmaßnahmen beispielsweise durch ein Überwachungscomputersystem, welches die protokollierten Log-Datensätze überwacht. Das Überwachungscomputersystem sendet die auszuführenden Gegenmaßnahmen beispielsweise an diejenigen Computersysteme, welche die entsprechenden auszuführenden Gegenmaßnahmen ausführen sollen. Ausführungsformen können insbesondere im Falle eines verteilten Computersystems mit einer Mehrzahl von Servern von Vorteil sein, da das Überwachungscomputersystem beispielsweise serverindividuelle Gegenmaßnahmen unter Verwendung der hinterlegten Gegenmaßnahmen bestimmen und die bestimmten serverindividuellen Gegenmaßnahmen ein oder mehreren der Server zum Ausführen zusenden kann. Beispielsweise umfassen die hinterlegten Gegenmaßnahmen Angaben dazu, welche Server welche Gegenmaßnahmen auszuführen hat bzw. geben Kriterien an, anhand derer bestimmt werden kann, welcher Server welche der Gegenmaßnahmen auszuführen hat. Bei einer bevorstehenden Funktionsstörung im Zuge von Datenübertragungen zwischen zwei oder mehr Servern können beispielsweise Gegenmaßnahmen für sendende und/oder für empfangende Server hinterlegt sein, wobei angegeben sein kann, welche der Gegenmaßnahmen von sendenden Servern und welche Gegenmaßnahmen von empfangenden Servern auszuführen sind.

Nach Ausführungsformen umfassen die auszuführenden Gegenmaßnahmen auszuführende Programminstruktionen. Nach Ausführungsformen umfassen die auszuführenden Gegenmaßnahmen durch das Computersystem auszuführende Programminstruktionen. Im Falle eines verteilten Computersystems umfassen die auszuführenden Gegenmaßnahmen beispielsweise durch ein oder mehrere weitere Computersysteme bzw. Server des verteilten Computersystems auszuführende Programminstruktionen. Ausführungsformen können den Vorteil haben, dass zum automatischen Ausführen der Gegenmaßnahmen beispielsweise die hinterlegten Programminstruktionen aufgerufen und ausgeführt werden. Diese Programminstruktionen können Programmroutinen zur automatisierten Störungskompensation oder Störungsbehebung bzw. Fehlerkompensation oder Fehlerkorrektur bereitstellen. Beispielsweise werden im Zuge des Ausführens der entsprechenden Programmroutinen Fehlerquelle beseitigt und/oder abhängige Prozesse gestoppt.

Nach Ausführungsformen erfolgt das Vorhersagen des bevorstehenden wiederholten Auftretens der Funktionsstörung, falls die Werte für eine vorbestimmte Mindestanzahl von Betriebsparametern der identifizierten Betriebsparameter des Computersystems innerhalb des vordefinierten dritten Zeitintervalls erfasst werden, für welche sich der dritte Unterschied in der dritten Wahrscheinlichkeit des Auftretens der entsprechenden Werte innerhalb der dritten Log-Datensätzen mindestens um den vordefinierten Größenwert von dem zweiten Unterschied in der zweiten Wahrscheinlichkeit des Auftretens der entsprechenden Werte innerhalb der zweiten Log-Datensätze unterscheidet.

Ausführungsformen können den Vorteil haben, dass eine frühere Vorhersage möglich ist. Beispielsweise wird das bevorstehende wiederholte Auftreten der Funktionsstörung bereits vorhergesagt, bevor für alle identifizierten Betriebsparameter des Computersystems Anomalien erfasst werden. Ferner ist das Verfahren dadurch beispielsweise weniger anfällig gegenüber Abweichungen im Zuge des Auftretens der entsprechenden Fehlfunktion. Beispielsweise kann eine entsprechende Fehlfunktion, etwa aufgrund statistischer Abweichung, auftreten, ohne dass für alle identifizierten Betriebsparameter des Computersystems Anomalien auftreten. Solche Abweichungen können durch eine Verwendung einer Mindestanzahl von Betriebsparametern der identifizierten Betriebsparameter ebenfalls abgedeckt werden.

Nach Ausführungsformen erfolgt das Vorhersagen des bevorstehenden wiederholten Auftretens der Funktionsstörung, falls die Werte für alle identifizierten Betriebsparameter des Computersystems innerhalb des vordefinierten dritten Zeitintervalls erfasst werden, für welche sich der dritte Unterschied in der dritten Wahrscheinlichkeit des Auftretens der entsprechenden Werte innerhalb der dritten Log-Datensätzen mindestens um den vordefinierten Größenwert von dem zweiten Unterschied in der zweiten Wahrscheinlichkeit des Auftretens der entsprechenden Werte innerhalb der zweiten Log-Datensätze unterscheidet.

Ausführungsformen können den Vorteil haben, dass die Gefahr eines False Positive bei der Vorhersage von Funktionsstörungen verringert werden kann. Dadurch das ein Auftreten von Anomalien für alle identifizierten Betriebsparameter notwendig für eine positive Vorhersage eines bevorstehenden wiederholten Auftretens der Funktionsstörung ist, erfolgen entsprechende Vorhersagen nur unter diesen relativ strengen Bedingungen.

Nach Ausführungsformen handelt es sich bei dem vordefinierten Größenwert um einen positiven Größenwert. Dies bedeutet, dass der erste Unterschied bzw. der dritte Unterschied größer sind als der zweite Unterschied. Mit anderen Worten, dass es sich bei der Anomalie um eine relative Abnahme der Korrelation zwischen den Werten der Betriebsparameter gegenüber einer Referenzkorrelation bzw. dem zweiten Unterschied handelt.

Nach Ausführungsformen handelt es sich bei dem vordefinierten Größenwert um einen negativen Größenwert. Dies bedeutet, dass der erste Unterschied bzw. der dritte Unterschied kleiner sind als der zweite Unterschied. Mit anderen Worten, dass es sich bei der Anomalie um eine relative Zunahme der Korrelation zwischen den Werten der Betriebsparameter gegenüber der Referenzkorrelation bzw. dem zweiten Unterschied handelt.

Nach Ausführungsformen handelt es sich bei dem vordefinierten Größenwert um den Betrag des Unterschieds zwischen den beiden entsprechenden Unterschieden in den Wahrscheinlichkeiten des Auftretens der entsprechenden Werte handelt. Durch Verwendung des Betrags lassen Anomalien sowohl in Form einer Zunahme, als auch Abnahmen der Korrelation berücksichtigen.

Nach Ausführungsformen handelt es sich bei dem vordefinierten Größenwert um einen prozentualen Größenwert. Nach Ausführungsformen handelt es sich bei dem vordefinierten Größenwert um einen absoluten Größenwert, d.h. eine Differenz.

Nach Ausführungsformen handelt es sich bei der Funktionsstörung um ein Fehlerereignis. Nach Ausführungsformen handelt es sich bei der Funktionsstörung um ein Unterschreiten eines vordefinierten Schwellenwerts. Beispielsweise definiert der vordefinierte Schwellenwert einen Mindestwert für einen Leistungsparameter, welcher im Regelbetrieb des Computersystems mindestens erfüllt werden sollte. Nach Ausführungsformen handelt es sich bei der Funktionsstörung um ein Überschreiten eines vordefinierten Schwellenwerts. Beispielsweise definiert der vordefinierte Schwellenwert einen Maximalwert für eine Belastung oder Auslastung des Computersystems oder einzelner Komponenten des Computersystems, welche im Regelbetrieb des Computersystems nicht überschritten werden sollte. Beispielsweise definiert der vordefinierte Schwellenwert einen Maximalwert für Temperatur des Computersystems oder einzelner Komponenten des Computersystems, welche im Regelbetrieb des Computersystems nicht überschritten werden sollte.

Nach Ausführungsformen umfasst das Speichern der Log-Datensätze ein Erstellen und Speichern eines normalisierten Index der von den Log-Datensätzen umfassten Werte für die Betriebsparameter des Computersystems. Die Anomalieanalyse wird unter Verwendung des normalisierten Indexes ausgeführt.

Nach Ausführungsformen umfasst das Speichern der Log-Daten ein Normalisieren der Log-Daten in Form des normalisierten Indexes. Nach Ausführungsformen erfüllt das Normalisieren die sechste Normalform erfüllt. Ausführungsformen können den Vorteil haben, dass Redundanzen vermieden werden können. Ausführungsformen können den Vorteil haben, dass eine zeitliche Einordnung der Log-Daten berücksichtigt wird.

Nach Ausführungsformen können die Log-Daten in Form von Relationen oder äquivalenten Strukturen gespeichert sein. Unter einer Relation wird hier im Sinn der relationalen Datenbanktheorie eine Menge von Tupel verstanden. Ein Tupel ist eine Menge von Attributwerten. Ein Attribut bezeichnet einen Datentyp bzw. eine ein oder mehreren Daten zugeordnete Eigenschaft. Dabei bestimmt die Anzahl der Attribute den Grad, die Anzahl der Tupel die Kardinalität einer Relation.

Unter einer Normalisierung, insbesondere unter einer Normalisierung eines relationalen Datenmodells, wird eine Aufteilung von Attributen in eine Mehrzahl von Relationen gemäß einer Normalisierungsregel verstanden, sodass Redundanzen reduziert bzw. minimiert werden. Ein relationales Datenmodell lässt sich beispielsweise in tabellenartigen Datenstrukturen implementieren, in denen die Relationen in Form von Tabellen, die Attribute in Form von Tabellenspalten und die Tupel in Form von Tabellenzeilen realisiert sind.

Datenredundanzen haben die Gefahr, dass es bei Änderungen von Daten, welche mehrfach umfasst sind, zu Inkonsistenzen kommen kann und Anomalien auftreten. Ferner steigt durch Redundanzen unnötiger Weise der Speicherplatzbedarf. Durch eine Normalisierung können solche Redundanzen verringert bzw. minimiert werden. Ein relationales Datenmodell kann beispielsweise in eine Normalform gebracht werden, indem die Relationen des Datenschemas fortschreitend anhand der für die entsprechende Normalform geltenden funktionalen Abhängigkeiten in einfachere Relationen zerlegt.

Es können beispielsweise folgende Normalformen unterschieden werden: 1. Normalform (1NF), 2. Normalform (2NF), 3. Normalform (3NF), Boyce-Codd-Normalform (BCNF), 4. Normalform (4NF), 5. Normalform (5NF), 6. Normalform (6NF).

Die Normalisierungskriterien nehmen dabei von Normalform zu Normalform zu und umfassen jeweils die Normalisierungskriterien der vorhergehenden Normalformen, d.h. 1NF $\subseteq$ 2NF $\subseteq$ 3NF $\subseteq$ BCNF $\subseteq$ 4NF $\subseteq$ 5NF $\subseteq$ 6NF.

Eine Relation ist in der ersten Normalform, falls jedes Attribut der Relation einen atomaren Wertebereich besitzt und die Relation frei von Wiederholungsgruppen ist. Unter atomar wird hier ein Ausschluss von zusammengesetzten, mengenwertigen oder geschachtelten Wertebereichen für die Attribute, d.h. relationenwertigen Attributwertebereichen, verstanden. Eine Freiheit von Wiederholungsgruppen erfordert es, dass Attribute, die gleiche bzw. gleichartige Information enthalten, in unterschiedliche Relationen ausgelagert werden.

Eine Relation ist in der zweiten Normalform, wenn sie die Anforderungen der ersten Normalform erfüllt und kein Nichtprimärattribut funktional von einer echten Teilmenge eines Schlüsselkandidaten abhängt. Ein Nichtprimärattribut ist ein Attribut, welches nicht Teil eines Schlüsselkandidaten ist. Das bedeutet, dass jedes Nichtprimärattribut jeweils von allen ganzen Schlüsseln abhängig und nicht nur von einem Teil eines Schlüssels. Relationen in der ersten Normalform, deren Schlüsselkandidaten nicht zusammengesetzt sind, sondern aus jeweils einem einzelnen Attribut bestehen, erfüllen mithin automatisch die zweite Normalform. Unter einem Schlüsselkandidaten wird hierbei eine minimale Menge von Attributen verstanden, welche die Tupel einer Relation eindeutig identifiziert.

Eine Relation ist in der dritten Normalform, wenn sie die Anforderungen der zweiten Normalform erfüllt und kein Nichtschlüsselattribut von einem Schlüsselkandidaten transitiv abhängt. Ein Attribut ist von einem Schlüsselkandidaten transitiv abhängig, wenn das entsprechende Attribut von dem entsprechenden Schlüsselkandidaten über ein weiteres Attribut abhängig ist.

Eine Relation ist in der Boyce-Codd-Normalform, wenn sie die Anforderungen der dritten Normalform erfüllt und jede Determinante ein Superschlüssel ist. Unter einer Determinante wird hier eine Attributmenge verstanden, von welcher andere Attribute funktional abhängen sind. Eine Determinante beschreibt somit die Abhängigkeit zwischen Attributen einer Relation und legt fest, welche Attributmengen den Wert der übrigen Attribute bestimmen. Ein Superschlüssel ist eine Menge von Attributen in einer Relation, welche die Tupel in dieser Relation eindeutig identifizieren. Mithin umfassen die Attribute dieser Menge bei paarweise ausgewählten Tupeln immer unterschiedliche Werte. Schlüsselkandidat ist mithin eine minimale Teilmenge der Attribute eines Superschlüssels, welche die Identifizierung der Tupel ermöglicht.

Eine Relation ist in der vierten Normalform, wenn sie die Anforderungen der Boyce-Codd-Normalform erfüllt und keine nichttrivialen mehrwertigen Abhängigkeiten umfasst.

Eine Relation ist in der fünften Normalform, wenn sie die Anforderungen der vierten Normalform erfüllt und keine mehrwertigen Abhängigkeiten umfasst, die voneinander abhängig sind. Die fünfte Normalform liegt somit vor, falls jeder nichttriviale Verbund-Abhängigkeit durch die Schlüsselkandidaten impliziert ist. Eine Verbund-Abhängigkeit ist durch die Schlüsselkandidaten der Ausgangsrelation impliziert, wenn jede Relation der Menge von Relationen ein Superschlüssel der Ausgangsrelation ist.

Eine Relation ist in der sechsten Normalform, wenn sie die Anforderungen der fünften Normalform erfüllt und keine nichttrivialen Verbund-Abhängigkeiten umfasst.

Eine Relation genügt einer Verbund-Abhängigkeit (join dependency) von einer Mehrzahl von Relationen, falls sich die Relation als Ausgangsrelation verlustlos in die entsprechende Menge von Relationen zerlegen lässt. Die Verbund-Abhängigkeit ist trivial, falls eine der Relationen der Menge von Relationen alle Attribute der Ausgangsrelation aufweist.

Nach Ausführungsformen handelt es sich bei der Datenbank um eine Multi-Modell Datenbank mit einem Multi-Modell-Datenbankmanagementsystem, welches zum Speichern der Log-Daten eine Mehrzahl von Datenmodellen verwendet. Beispielsweise werden die Log-Daten in einem ersten dokumentenorientierten Datenmodell gespeichert. Ein dokumentenorientiertes Datenmodell bedeutet, dass das Datenmodell keine strukturellen Vorgaben an die zu speichernden Daten stellt. Vielmehr werden die Daten in Dokumenten bzw. Datencontainern in der Form gespeichert, in der empfangen werden. In diesem Sinne handelt es sich bei den in dem dokumentenorientierten Datenmodell gespeicherten Daten um Rohdaten. Rohdaten bedeutet, dass die Daten in der Form abgespeichert werden, in der sie empfangen werden, ohne eine zusätzliche Datenverarbeitung durch das Datenbankmanagementsystem, insbesondere keine Umstrukturierung der Daten. Ausführungsformen können den Vorteil haben, dass somit der gesamte Informationsgehalt der empfangenen Daten (nahezu) vollständig beibehalten werden kann, ohne dass Vorannahmen des Datenbankmanagementsystems einfließen. Somit kann jederzeit auf die ursprünglichen Datenbestände zurückgreifen und diese in bei der weiteren Verarbeitung berücksichtigen. Basierend auf diesem Datenpool an Rohdaten, welchen das dokumentenbasierte Datenmodell bereitstellt, wird die Normalisierung der Daten ausgeführt und ein Index erzeugt. Bei diesem Index handelt es sich beispielsweise um eine inhaltsbasierte mehrstufige Indexstruktur. Dieser Index stellt ein zweites Datenmodell dar, welches beispielsweise die sechste Normalform aufweist. So können alle Felder und Feldinhalte redundanzfrei von dem ersten Datenmodell in das normalisierte zweite Datenmodell übertragen werden, welches beispielsweise die Form eines mehrdimensionalen Schlüssel/Wert-Speichers (Key/Value-Store) bzw. einer mehrdimensionalen Key-Value-Datenbanken aufweist.

Beispielsweise werden zusätzlich Transaktionszeit und Gültigkeitszeit der Datensätze bitemporal gespeichert. Die Transaktionszeit gibt den Zeitpunkt an, zu dem eine Änderung eines Datenobjekts in der Datenbank erfolgt. Die Gültigkeitszeit gibt einen Zeitpunkt oder Zeitintervall an, in dem ein Datenobjekt im modellierten Abbild der realen Welt den beschriebenen Zustand aufweist. Sind sowohl Gültigkeits- als auch Transaktionszeit relevant, spricht man von bitemporal. Zu jedem Datensatz wird mithin nicht nur der Zustand des Datensatzes bei der letzten Transaktion bzw. Änderung ersichtlich, sondern auch dessen Historie. In diesem Fall spricht man von bitemporaler Datenbank, bei welcher sowohl Gültigkeits- als auch Transaktionszeit der Datensätze berücksichtigt werden.

Ein Schlüssel-Werte-Datenmodell ermöglicht ein Speichern, Abrufen und Verwalten von assoziativen Datenfeldern. Dabei werden Werte (Value) über einen Schlüssel (Key) eindeutig identifiziert.

Ausführungsformen können den Vorteil haben, dass die Log-Daten in beiden Datenmodellen abgespeichert und für Analysen zur Verfügung gestellt werden können.

Nach Ausführungsformen führt das Computersystem selbst die Anomalieanalyse durch. Nach Ausführungsformen überwacht das Computersystem selbst die Log-Daten. Nach Ausführungsformen handelt es sich bei der Datenbank um eine Datenbank des Computersystems. Ausführungsformen können den Vorteil haben, dass das Computersystem die Log-Daten selbst protokolliert, auf ein Auftreten von Anomalien analysiert und/oder unter Verwendung der Ergebnisse der Anomalieanalyse eine Log-Datenüberwachung ausführt.

Nach Ausführungsformen führt ein Analysecomputersystem, d.h. ein weiteres Computersystem, die Anomalieanalyse durch. Dies kann beispielsweise der Fall sein, falls es sich bei dem Computersystem um einen Server eines verteilten Computersystems handelt, welches eine Mehrzahl von Servern umfasst. Beispielsweise führt einer der Server als Analysecomputersystem die Log-Datenanalyse für ein, mehrere und/oder alle Einzelcomputersysteme bzw. Server des verteilten Computersystems durch. Nach Ausführungsformen handelt es sich bei der Datenbank um eine Datenbank des Computersystems. Das Protokollieren der Log-Daten in der Datenbank kann beispielsweise lokal auf den einzelnen Servern durch die jeweiligen Server erfolgen, wobei das Analysecomputersystem Zugriff auf die lokal gespeicherten Log-Datensätze besitzt. Das Protokollieren der Log-Daten kann in einer oder mehreren zentralen Datenbanken erfolgen, auf welche sowohl das oder die protokollierenden Computersysteme bzw. Server als auch das Analysecomputersystem Zugriff besitzen. Nach Ausführungsformen handelt es sich bei der Datenbank um eine Datenbank des Analysecomputersystems.

Zum Ausführen der Anomalieanalyse benötigt das Analysecomputersystem Zugriff auf die zu analysierenden Log-Datensätze. Dieser Zugriff kann beispielsweise einen Zugriff auf ein oder mehrere Datenbänke umfassen, in welchen die zu analysierenden Log-Datensätze gespeichert sind. Beispielsweise sendet das Computersystem die entsprechenden Log-Datensätze zur Anomalieanalyse an das Analysecomputersystem.

Nach Ausführungsformen überwacht das Computersystem selbst die protokollierten Log-Daten. Hierzu empfängt das Computersystem beispielsweise die im Zuge der Anomalieanalyse identifizierte Betriebsparameter von dem Analysecomputersystem. Für diese von dem Analysecomputersystem identifizierten Betriebsparameter werden dann beispielsweise von dem Computersystem die in den Log-Datensätzen des entsprechenden Computersystems protokollierten Werte überwacht. Ausführungsformen können den Vorteil haben, dass die Überwachung lokal erfolgen kann. Dies kann beispielsweise eine zeitnahe lokale Vorhersage der bevorstehenden Funktionsstörung ermöglichen. Gegebenenfalls können so auch zeitnahe lokale Gegenmaßnahmen eingeleitet werden, um die Funktionsstörung zu verhindern, abzuschwächen und/oder nachteilige Folgen der Funktionsstörung zu verhindern oder abzuschwächen.

Die Überwachung der Log-Daten kann ebenfalls durch das Analysecomputersystem oder jeweils eigenständig durch die einzelnen Server erfolgen. Hierzu benötigt das die Überwachung ausführende Computersystem Zugriff auf die zu überwachenden Log-Daten. Dieser Zugriff kann beispielsweise einen Zugriff auf ein oder mehrere Datenbänke umfassen, in welchen die Log-Datensätze gespeichert sind. Beispielsweise sendet das Computersystem protokollierte Log-Datensätze zur Überwachung an das Analysecomputersystem. Beispielsweise werden die protokollierten Log-Datensätze von dem Computersystem in einer Datenbank gespeichert, auf welche das Analysecomputersystem zur Überwachung Zugriff besitzt.

Ausführungsformen können den Vorteil haben, dass ein spezifisch hierfür konfiguriertes Analysecomputersystem zum Ausführen der Anomalieanalyse und/oder Überwachung der für die identifizierten Betriebsparameter protokollierten Werte verwendet werden kann. In einem verteilten Computersystem, welches eine Mehrzahl von Einzelcomputersystemen, wie etwa Server umfasst, kann beispielsweise einer der Server als Analysecomputersystem eine Anomalieanalyse für das verteilte Computersystem ausführen. Dabei kann das Analysecomputersystem zur Log-Datenanalyse Log-Daten von mehreren oder allen Servern des Systems verwendet. Dies kann beispielsweise den Vorteil haben, dass eine Anomalieanalyse über eine Mehrzahl von Servern hinweg ermöglicht wird. Ferner können bei der Überwachung Anomalien über mehrere Server hinweg berücksichtigt und zur Vorhersage eines bevorstehenden wiederholten Auftretens einer Funktionsstörung verwendet werden.

Nach Ausführungsformen werden für die Anomalieanalyse Log-Datensätze ein und desselben Computersystems verwendet. Im Falle eines verteilten Computersystems, welches eine Mehrzahl von Einzelcomputersystemen bzw. Servern umfasst, wird die Anomalieanalyse beispielsweise jeweils Log-Datensätze ein und desselben Einzelcomputersystems verwendet. Die identifizierten Betriebsparameter werden beispielsweise nur zur Überwachung desjenigen Einzelcomputersystems verwendet, für welche die entsprechenden Betriebsparameter identifiziert wurden. Beispielsweise werden die identifizierten Betriebsparameter zur Überwachung aller Einzelcomputersystems des verteilten Computersystems verwendet.

Nach Ausführungsformen werden für die Anomalieanalyse die Log-Datensätze einer Mehrzahl von Computersystemen gemeinsam ausgewertet. Dabei erfolgt die Anomalieanalyse also beispielsweise über Log-Datensätze einer Mehrzahl von Servern hinweg. Beispielsweise werden die identifizierten Betriebsparameter zur Überwachung aller Computersystems der Mehrzahl von Computersystemen, etwa aller Einzelcomputersysteme eines verteilten Computersystems, verwendet. Somit können beispielsweise Korrelationen zwischen den Log-Datensätzen der mehreren Server bei der Anomalieanalyse berücksichtigt und in Form der identifizierten Betriebsparameter zur Vorhersage eines bevorstehenden wiederholten Auftretens einer Funktionsstörung in einem oder mehreren der Server verwendet werden. Entsprechende Korrelationen können beispielsweise auf kausalen Zusammenhängen zwischen Ereignissen beruhen, welche auf verschiedenen Servern auftreten. Entsprechende Korrelationen können beispielsweise auf einem kausalen Zusammenhang der Funktionsstörung und Ereignissen beruhen, welche auf verschiedenen Servern auftreten. Beispielsweise beruht die Funktionsstörung auf einem Zusammenwirken der entsprechenden Ereignisse.

Nach Ausführungsformen handelt es sich bei dem Computersystem um einen ersten Server eines verteilten Computersystems, welches eine Mehrzahl von Servern umfasst. Auf jedem der Server der Mehrzahl von Servern werden jeweils Log-Daten protokolliert.

Ausführungsformen können den Vorteil haben, dass ein wiederholtes Auftreten einer Funktionsstörung auf einem verteilten Computersystem vorhergesagt werden kann. Die Überwachung der Log-Daten kann beispielsweise lokal auf den einzelnen Servern oder zentral erfolgen.

Nach Ausführungsformen erfolgt das Ausführen der Anomalieanalyse und das Identifizieren derjenigen Betriebsparameter, deren Werte von den bestimmten ein oder mehreren Anomalien umfasst sind, durch den ersten Server. Die identifizierten Betriebsparameter werden von dem ersten Server an die weiteren Server der Mehrzahl von Servern des verteilten Computersystems weitergeleitet. Die weiteren Server speichern jeweils die identifizierten Betriebsparameter. Das Überwachen der für die identifizierten Betriebsparameter in den Log-Datensätzen protokollierten Werte erfolgt jeweils durch den die entsprechenden Werte protokollierenden Server der Mehrzahl von Servern.

Ausführungsformen können den Vorteil haben, dass die Anomalieanalyse zentral durch den ersten Server, die Überwachung der Log-Datensätze und die Vorhersage eines bevorstehenden wiederholten Auftretens der Funktionsstörung unter Verwendung des Ergebnisses der Anomalieanalyse aber lokal auf den weiteren Servern erfolgt.

Nach Ausführungsformen wird die Zuordnung der auszuführenden Gegenmaßnahmen zu der Funktionsstörung jeweils in den einzelnen Servern der Mehrzahl von Servern gespeichert. Auf die Vorhersage des bevorstehenden wiederholten Auftretens der Funktionsstörung durch einen Server der Mehrzahl von Servern hin, werden automatisch die gespeicherten, der Funktionsstörung zugeordneten Gegenmaßnahmen durch den entsprechenden Server der Mehrzahl von Servern ausgeführt.

Ausführungsformen können den Vorteil haben, dass die Gegenmaßnahmen auf die Vorhersage eines bevorstehenden wiederholten Auftretens der Funktionsstörung von den einzelnen Servern jeweils lokal initiiert werden.

Nach Ausführungsformen erfolgt das Ausführen der Anomalieanalyse, das Identifizieren derjenigen Betriebsparameter, deren Werte von den bestimmten ein oder mehreren Anomalien umfasst sind, und das Überwachen der für die identifizierten Betriebsparameter in den Log-Datensätzen protokollierten Werte durch den ersten Server. Auf die Vorhersage des bevorstehenden wiederholten Auftretens der Funktionsstörung hin, werden durch den ersten Server ein oder mehrere Server der Mehrzahl von Servern bestimmt, bei welchen das wiederholte Auftreten der Funktionsstörung bevorsteht.

Ausführungsformen können den Vorteil haben, dass sowohl die Anomalieanalyse, als auch die Überwachung der Log-Datensätze unter Verwendung des Ergebnisses der Anomalieanalyse jeweils zentral durch den ersten Server erfolgt.

Nach Ausführungsformen wird für die ein oder mehreren bestimmten Server durch den ersten Server jeweils ein Warnhinweis ausgegeben. Ausführungsformen können den Vorteil haben, dass Warnhinweise für die Server zentral von dem ersten Server, auf eine Vorhersage eines bevorstehenden wiederholten lokalen Auftretens der Funktionsstörung hin, ausgegeben werden.

Nach Ausführungsformen wird die Zuordnung der auszuführenden Gegenmaßnahmen zu der Funktionsstörung in dem ersten Server der Servergruppe gespeichert. Auf die Vorhersage des bevorstehenden wiederholten Auftretens der Funktionsstörung durch den ersten Server hin, werden automatisch ein oder mehrere Befehle an die ein oder mehrere bestimmten Server der Servergruppe gesendet, welche die durch die ein oder mehrere bestimmten Server auszuführenden Gegenmaßnahmen definieren, welche der Funktionsstörung zugeordneten sind.

Ausführungsformen können den Vorteil haben, dass die Gegenmaßnahmen auf den einzelnen Servern zentral auf die Vorhersage eines bevorstehenden wiederholten Auftretens der Funktionsstörung hin von dem ersten Server initiiert werden.

Ausführungsformen umfassen ein Computersystem mit einem Prozessor und einem Speicher. In dem Speicher sind Programminstruktionen gespeichert. Ein Ausführen der Programminstruktionen durch den Prozessor veranlasst den Prozessor dazu das Computersystem so zu steuern, dass das Computersystem ein Verfahren zur Vorhersage eines wiederholten Auftretens einer Funktionsstörung des Computersystems unter Verwendung von protokollierten Log-Daten des Computersystems ausführt.

Das Verfahren umfasst:

- Protokollieren von Log-Daten, wobei das Protokollieren der Log-Daten ein Speichern von Log-Datensätzen in einer Datenbank umfasst, wobei die Log-Datensätze während des Betriebes des Computersystems erfasste Werte zu einer Mehrzahl von Betriebsparametern des Computersystems umfassen, wobei die Log-Datensätze ferner jeweils eine Zeitangabe umfassen, welche angibt, wann die protokollierten Werte erfasst wurden,
- auf ein Auftreten der Funktionsstörung des Computersystems hin, Ausführen einer Anomalieanalyse, wobei die Anomalieanalyse ein Bestimmen von ein oder mehreren Anomalien innerhalb erster Log-Datensätze der protokollierten Log-Datensätze umfasst, deren protokollierte Werte innerhalb eines der Funktionsstörung unmittelbar vorangehenden vordefinierten ersten Zeitintervalls erfasst wurden, wobei die Anomalien jeweils eine Kombination von Werten von Betriebsparametern des Computersystems sind, für welche sich ein erster Unterschied in einer ersten Wahrscheinlichkeit eines Auftretens der entsprechenden Werte innerhalb der ersten Log-Datensätze mindestens um einen vordefinierten Größenwert von einem zweiten Unterschied in einer zweiten Wahrscheinlichkeit eines Auftretens der entsprechenden Werte innerhalb von zweiten Log-Datensätze der protokollierten Log-Datensätze unterscheidet, deren Werte in einem vordefinierten zweiten Zeitintervall erfasst wurden,
- Identifizieren derjenigen Betriebsparameter des Computersystems, deren Werte von den bestimmten ein oder mehreren Anomalien umfasst sind,
- Überwachen der für die identifizierten Betriebsparameter des Computersystems in den Log-Datensätzen protokollierten Werte, wobei das Überwachen ein Vorhersagen eines bevorstehenden wiederholten Auftretens der Funktionsstörung umfasst, falls Werte für die identifizierten Betriebsparameter des Computersystems innerhalb eines vordefinierten dritten Zeitintervalls erfasst werden, für welche sich ein dritter Unterschied in einer dritten Wahrscheinlichkeit eines Auftretens der entsprechenden Werte innerhalb von dritten Log-Datensätzen der protokollierten Log-Datensätze, deren protokollierte Werte innerhalb des vordefinierten dritten Zeitintervalls erfasst werden, mindestens um den vordefinierten Größenwert von dem zweiten Unterschied in der zweiten Wahrscheinlichkeit des Auftretens der entsprechenden Werte innerhalb der zweiten Log-Datensätze unterscheidet.

Nach Ausführungsformen ist das Computersystem dazu konfiguriert jede der zuvor beschriebenen Ausführungsformen des Verfahrens zur Vorhersage des wiederholten Auftretens der Funktionsstörung unter Verwendung der protokollierten Log-Daten auszuführen.

Nach Ausführungsformen handelt es sich bei den Log-Daten um Log-Daten des Computersystems selbst. Nach Ausführungsformen handelt es sich bei den Log-Daten um Log-Daten eines weiteren Computersystems, welche das Computersystem empfängt bzw. auf welche das Computersystem Zugriff besitzt und welche das Computersystem analysiert. Beispielsweise tritt die Funktionsstörung auf dem Computersystem auf.

Beispielsweise tritt die Funktionsstörung auf einem weiteren Computersystem auf, welches mit dem Computersystem verbunden ist. Im Falle eines Vorhersagens eines bevorstehenden wiederholten Auftretens der Funktionsstörung wird die entsprechende Vorhersage und/oder ein Warnhinweis beispielsweise an das weitere Computersystem gesendet.

Nach Ausführungsformen handelt es sich bei den Kombinationen von Werten jeweils um Wertepaare.

Nach Ausführungsformen ist der Unterschied in der Wahrscheinlichkeit eines Auftretens eines ersten Werts $x_0$ eines ersten Betriebsparameters X eines Wertepaars und eines zweiten Werts $y_0$ eines zweiten Betriebsparameters Y des Wertepaars innerhalb der Log-Datensätze eines der vordefinierten Zeitintervalle $\Delta t_i$ definiert als

$$\frac{1}{2}\|p_{Z|X=x_0} - p_{Z|Y=y_0}\|_1 = \frac{1}{2} \cdot \sum_Z \sum_{z \in V(Z)} |p_{Z|X=x_0}(z) - p_{Z|Y=y_0}(z)|.$$

Die Summation läuft über alle weiteren dritten Betriebsparameter Z und alle dritten Werte z, welche für die weiteren dritten Betriebsparameter Z innerhalb der Log-Datensätze der Datenbank protokolliert sind. Eine Wahrscheinlichkeit eines Auftretens eines dritten Werts z eines weiteren dritten Betriebsparameters Z in Kombination mit dem ersten Wert $x_0$ der ersten Betriebsparameter X ist definiert als

$$p_{Z|X=x_0}(z) = \frac{\left| I_Z(z) \cap I_X^{\Delta t_i}(x_0) \right|}{\left| I_X^{\Delta t_i}(x_0) \right|}.$$

$I_X^{\Delta t_i}(x_0)$ ist die Menge der Log-Datensätze des entsprechenden vordefinierten Zeitintervalls $\Delta t_i$, welche den ersten Wert $x_0$ für den ersten Betriebsparameter X umfassen. $I_Z(z)$ ist die Menge der Log-Datensätze der Datenbank, welche den dritten Wert z für den weiteren dritten Betriebsparameter Z umfassen. Eine Wahrscheinlichkeit eines Auftretens eines dritten Werts z eines weiteren dritten Betriebsparameters Z in Kombination mit dem zweiten Wert $y_0$ des zweiten Betriebsparameters Y ist definiert als

$$p_{Z|Y=y_0}(z) = \frac{\left| I_Z(z) \cap I_Y^{\Delta t_i}(y_0) \right|}{\left| I_Y^{\Delta t_i}(y_0) \right|}.$$

$I_Y^{\Delta t_i}(y_0)$ ist die Menge der Log-Datensätze des entsprechenden vordefinierten Zeitintervalls $\Delta t_i$ ist, welche den zweiten Wert $y_0$ für den erste Betriebsparameter Y umfassen.

Nach Ausführungsformen ist der Unterschied in der Wahrscheinlichkeit des Auftretens des ersten Werts $x_0$ des ersten Betriebsparameters X des Wertepaars und des zweiten Werts $y_0$ des zweiten Betriebsparameters Y des Wertepaars innerhalb der Log-Datensätze eines der vordefinierten Zeitintervalle $\Delta t_i$ definiert ist als ein redundanzfreier Unterschied der Form

$$\frac{1}{2}\left(\|p_{Z|X=x_0 \wedge Y=y_0} - p_{Z|X=x_0}\|_1 - \|p_{Z|X=x_0 \wedge Y=y_0} - p_{Z|Y=y_0}\|_1\right)$$

Dabei gilt:

$$\frac{1}{2}\|p_{Z|X=x_0 \wedge Y=y_0} - p_{Z|X=x_0}\|_1 = \frac{1}{2} \cdot \sum_Z \sum_{z \in V(Z)} |p_{Z|X=x_0 \wedge Y=y_0}(z) - p_{Z|X=x_0}(z)|,$$

$$\frac{1}{2}\|p_{Z|X=x_0 \wedge Y=y_0} - p_{Z|Y=y_0}\|_1 = \frac{1}{2} \cdot \sum_Z \sum_{z \in V(Z)} |p_{Z|X=x_0 \wedge Y=y_0}(z) - p_{Z|Y=y_0}(z)|.$$

Ferner gilt:

$$p_{Z|X=x_0 \wedge Y=y_0}(z) = \frac{\left| I_Z(z) \cap I_X^{\Delta t_i}(x_0) \cap I_Y^{\Delta t_i}(y_0) \right|}{\left| I_X^{\Delta t_i}(x_0) \cap I_Y^{\Delta t_i}(y_0) \right|}.$$

Ausführungsformen umfassen ein verteiltes Computersystem, welches eine Mehrzahl von Servern umfasst.

Bei einem ersten Server der Mehrzahl von Servern handelt es sich um ein Computersystem nach einer der zuvor beschriebenen Ausführungsformen eines Computersystems zur Vorhersage eines wiederholten Auftretens einer Funktionsstörung. Auf jedem der der Server der Mehrzahl von Servern werden jeweils Log-Daten protokolliert.

Nach Ausführungsformen ist das verteilte Computersystem dazu konfiguriert jede der zuvor beschriebenen Ausführungsformen des Verfahrens zur Vorhersage des wiederholten Auftretens der Funktionsstörung unter Verwendung der protokollierten Log-Daten auszuführen.

Nach Ausführungsformen erfolgt das Ausführen der Anomalieanalyse und das Identifizieren derjenigen Betriebsparameter, deren Werte von den bestimmten ein oder mehreren Anomalien umfasst sind, durch den ersten Server. Die identifizierten Betriebsparameter werden von dem ersten Server an die weiteren Server der Mehrzahl von Servern des verteilten Computersystems weitergeleitet. Die weiteren Server speichern jeweils die identifizierten Betriebsparameter. Das Überwachen der für die identifizierten Betriebsparameter in den Log-Datensätzen protokollierten Werte erfolgt jeweils durch den die entsprechenden Werte protokollierenden Server der Mehrzahl von Servern.

Nach Ausführungsformen erfolgt das Ausführen der Anomalieanalyse, das Identifizieren derjenigen Betriebsparameter, deren Werte von den bestimmten ein oder mehreren Anomalien umfasst sind, und das Überwachen der für die identifizierten Betriebsparameter in den Log-Datensätzen protokollierten Werte durch den ersten Server. Auf die Vorhersage des bevorstehenden wiederholten Auftretens der Funktionsstörung hin, werden durch den ersten Server ein oder mehrere Server der Mehrzahl von Servern bestimmt, bei welchen das wiederholte Auftreten der Funktionsstörung bevorsteht.

Unter einer "Datenbank" wird hier eine gespeicherte Menge von Daten verstanden. Die Menge von Daten kann strukturiert sei, beispielsweise gemäß einer für die Datenbank vorgegebenen Struktur. Ferner kann zur Verwaltung der Daten der Datenbank ein "Datenbankmanagementsystem" bzw. eine Datenverwaltungssoftware bereitgestellt werden. Unter einem "Datenbankmanagementsystem" wird hier eine auf einem Computersystem ausgeführte Datenverwaltungssoftware zum Speichern und Wiedergewinnen von Daten in einer Datenbank verstanden. Beispielsweise gibt das Datenbankmanagementsystem die für die Speicherung der Daten zu verwendende Struktur vor. Je nach der verwendeten Datenverwaltungssoftware können die Daten in unterschiedlicher Form bzw. unter Verwendung unterschiedlicher Strukturen gespeichert werden. Beispielsweise werden die Daten in Datensätzen aus jeweils mehreren Datenfeldern gespeichert werden.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Ein Prozessor umfasst beispielsweise ein Rechenwerk, ein Steuerwerk, Register und Datenleitungen zur Kommunikation mit anderen Komponenten. Insbesondere wird unter einem "Prozessor" ein Mikroprozessor oder ein Mikroprozessorsystem aus mehreren Prozessorkernen und/oder mehreren Mikroprozessoren verstanden.

Unter einem "Speicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten, insbesondere von statischen kryptographischen Schlüsseln, Attributen oder Kennungen, verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einer "Schnittstelle" bzw. "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann. Eine Kommunikationsschnittstelle kann beispielsweise eine Kommunikation über ein Netzwerk ermöglichen. Je nach Konfiguration kann eine Kommunikationsschnittstelle beispielsweise eine kabellose Kommunikation nach einem Mobilfunkstandard, Bluetooth-, RFID-, WiFi und/oder NFC-Standard bereitstellen. Je nach Konfiguration kann eine Kommunikationsschnittstelle beispielsweise eine kabelbasierte Kommunikation bereitstellen.

Eine Kommunikation kann beispielsweise über ein Netzwerk erfolgen. Unter einem "Netzwerk" wird hier jedes Übertragungsmedium mit einer Anbindung zur Kommunikation verstanden, insbesondere eine lokale Verbindung oder ein lokales Netzwerk, insbesondere ein Local Area Network (LAN), ein privates Netzwerk, insbesondere ein Intranet, und ein digitales privates Netzwerk (Virtual Private Network- VPN). Beispielsweise kann ein Computersystem eine Standardfunkschnittstelle zur Anbindung an ein WLAN aufweisen. Ferner kann es sich um ein öffentliches Netzwerk, wie beispielsweise das Internet handeln. Je nach Ausführungsform kann diese Verbindung auch über ein Mobilfunknetz hergestellt werden.

Im Weiteren werden Ausführungsformen der Erfindung mit Bezugnahme auf die Zeichnungen näher erläutert. Es zeigen:

Figur 1    ein schematisches Diagramm eines exemplarischen Computersystems zur Vorhersage einer Funktionsstörung,

Figur 2    ein schematisches Diagramm eines exemplarischen verteilten Computersystems mit einem Server zur Vorhersage einer Funktionsstörung,

Figur 3    ein schematisches Diagramm eines exemplarischen verteilten Computersystems mit einem Server zur Vorhersage einer Funktionsstörung,

Figur 4    ein schematisches Diagramm einer exemplarischen Log-Datenanalyse zur Vorhersage einer Funktionsstörung,

Figur 5    ein schematisches Diagramm einer exemplarischen Log-Datenanalyse zur Vorhersage einer Funktionsstörung,

Figur 6    ein schematisches Diagramm einer exemplarischen Log-Datenanalyse zur Vorhersage einer Funktionsstörung,

Figur 7    ein Flussdiagramm eines exemplarischen Verfahrens zur Vorhersage einer Funktionsstörung und

Figur 8    ein Flussdiagramm eines exemplarischen Verfahrens zur Vorhersage einer Funktionsstörung.

Elemente der nachfolgenden Ausführungsformen, die einander entsprechen, werden mit denselben Bezugszeichen gekennzeichnet.

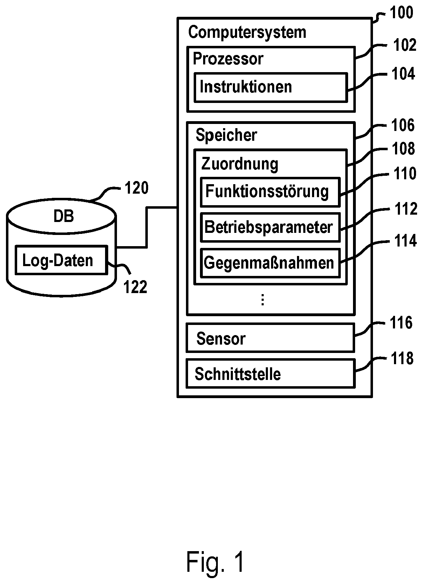

Figur 1 zeigt ein Computersystem 100 zur Vorhersage einer Funktionsstörung. Hierzu analysiert und überwacht das Computersystem 100 Log-Daten 122. Das Computersystem 100 umfasst einen Prozessor 102, einen Speicher 106 und eine

Kommunikationsschnittstelle 118. Der Prozessor 102 ist dazu konfiguriert unter Ausführen von Programminstruktion 104 das Computersystem 100 zum Analysieren von Log-Daten 122 und Vorhersagen eines wiederholten Auftretens der Funktionsstörung zu steuern. Das Computersystem 100 protokolliert Log-Daten 122. Die Log-Daten 122 werden in Form von Log-Datensätzen in einer Datenbank 120 gespeichert. Die Log-Datensätze umfassen Werte zu einer Mehrzahl von Betriebsparametern eines überwachten Computersystems, beispielsweise des Computersystems 100, welche während des Betriebes des entsprechenden Computersystems erfasst werden. Das Computersystem 100 besitzt Zugriff auf die Datenbank 120. Beispielsweise umfasst das Computersystem 100 die Datenbank 120. Beispielsweise handelt es sich bei der Datenbank 120 um eine externe bzw. entfernte Datenbank. Bei den protokollierten Log-Daten 122 kann es sich um Log-Daten des Computersystems 100 und/oder um Log-Daten eines oder mehrerer weiterer Computersysteme, wie etwa Servern, handeln. Die Log-Daten 122 protokollieren beispielsweise Fehler, Warnungen und Informationen, welche beispielsweise durch ein Betriebssystem und/oder ein Analyseprogramm des die Log-Daten 122 protokollierenden Computersystems erfasst werden. Die Log-Daten 122 werden beispielsweise jeweils mit einer Zeitangabe, etwa einem Zeitstempel, protokolliert, welche angibt, wann die protokollierten Werte erfasst wurden. Somit lassen sich die protokollierten Werte bzw. die sie umfassenden Log-Datensätze Zeitintervallen zuordnen. Ferner können die Log-Daten 122 Daten umfassen, welche unter Verwendung ein oder mehrerer Sensoren 116 des Computersystems 100 zur Überwachung des Betriebs des Computersystems 100 erfasst werden. Die Sensoren 116 können beispielsweise dazu konfiguriert sein, Temperaturen, Spannungen und/oder Stromstärken zu erfassen.

Auf ein Auftreten einer Funktionsstörung hin, führt das Computersystems 100 eine Anomalieanalyse unter Verwendung der Log-Daten 122 aus. Im Zuge der Anomalieanalyse werden ein oder mehreren Anomalien innerhalb erster Log-Datensätze der Log-Daten 122 bestimmt, deren protokollierte Werte innerhalb eines der Funktionsstörung unmittelbar vorangehenden vordefinierten ersten Zeitintervalls erfasst wurden. Anomalien treten jeweils in Form von Kombinationen von Werten von Betriebsparametern des überwachten Computersystems, beispielsweise des Computersystems 100 auf, für welche sich ein erster Unterschied in einer ersten Wahrscheinlichkeit eines Auftretens der entsprechenden Werte innerhalb der ersten Log-Datensätze mindestens um einen vordefinierten Größenwert von einem zweiten Unterschied in einer zweiten Wahrscheinlichkeit eines Auftretens der entsprechenden Werte innerhalb von zweiten Log-Datensätze der protokollierten Log-Daten 122 unterscheidet, deren Werte in einem vordefinierten zweiten Zeitintervall erfasst wurden. Basierend auf dieser Anomalieanalyse werden diejenigen Betriebsparameter 112 des überwachten Computersystems identifiziert, deren Werte von den bestimmten ein oder mehreren Anomalien umfasst werden. Die Unterschiede in den Wahrscheinlichkeiten sind ein Maß für eine Korrelation zwischen den betrachteten Werten der Betriebsparameter. Je geringer der Unterschied, desto mehr entsprechen sich die Wahrscheinlichkeitsverteilungen der entsprechenden Werte und desto höher ist der Grad der Korrelation. Betrachtet werden nun Änderungen in diesem Grad der Korrelation. Es wird untersucht, ob der Grad der Korrelation vor einer Funktionsstörung signifikant zu- oder abnimmt. Es wird dabei nach ein oder mehreren Kombinationen von Betriebsparametern gesucht, für deren Werte sich eine Korrelation vor dem Auftreten einer Funktionsstörung signifikant ändert und die damit als Indikator für die bevorstehende Funktionsstörung dienen können. Die identifizierten Betriebsparameter 112 werden der Funktionsstörung 110 bzw. einem Identifikator derselben zugeordnet. Die resultierende Zuordnung 108 wird gespeichert und als Vergleichsdatensatz für ein Vorsagen eines bevorstehenden wiederholten Auftretens der Funktionsstörung 110 verwendet. Die Zuordnung kann beispielsweise in dem Speicher 106 Computersystem 100 oder in der Datenbank 120 gespeichert werden.

Weitere Log-Daten 122, welche in der Datenbank 120 protokolliert werden, werden von dem Computersystem 100 oder einem anderen Computersystem, welchem die Zuordnung 108 vorliegt und/oder welches Zugriff auf die Zuordnung 108 besitzt, kontinuierlich überwacht. Falls Werte für die identifizierten Betriebsparameter 112 der Zuordnung 108 innerhalb eines vordefinierten dritten Zeitintervalls erfasst werden, für welche sich ein dritter Unterschied in einer dritten Wahrscheinlichkeit eines Auftretens der entsprechenden Werte innerhalb von dritten Log-Datensätzen der protokollierten Log-Daten 122, deren protokollierte Werte innerhalb des vordefinierten dritten Zeitintervalls erfasst werden, mindestens um den vordefinierten Größenwert von dem zweiten Unterschied in der zweiten Wahrscheinlichkeit des Auftretens der entsprechenden Werte innerhalb der zweiten Log-Datensätze unterscheidet, wird ein bevorstehendes Auftreten der zugeordneten Funktionsstörung 110 vorhergesagt. Beispielsweise wird auf die Vorhersage der bevorstehenden Funktionsstörung 110 hin ein Warnhinweis über die Kommunikationsschnittstelle des Computersystem 100 an andere Computersysteme ausgegeben, welche von der Funktionsstörung direkt oder bei Auftreten der Funktionsstörung auf dem Computersystem 100 indirekt betroffen sind. Beispielsweise handelt es sich bei dem anderen Computersystem um ein Admin-Computersystem, welches einem Administrator des Computersystems 100 zugeordnet ist. Beispielsweise wird der Warnhinweis über eine Nutzerschnittstelle des Computersystems 100 auf einer Ausgabevorrichtung des Computersystems 100, wie etwa einem Display, ausgegeben.

Ferner können auf das Auftreten der Funktionsstörung 110 auszuführende Gegenmaßnahmen 114 zur Vermeidung oder Beschränkung der Auswirkungen der Funktionsstörung 110 festgelegt und der Zuordnung 108 hinzugefügt werden. Beispielsweise umfassen die Gegenmaßnahmen 114 ausführbare Programminstruktionen, welche zur Vermeidung oder Beschränkung der Auswirkungen der Funktionsstörung 110 auszuführen sind. Auf die Vorhersage der bevorstehenden Funktionsstörung 110 hin, werden die Gegenmaßnahmen 114, beispielsweise von dem Computersystem 100 und/oder weiteren Computersystemen, automatisch ausgeführt. Die Gegenmaßnahmen 114 umfassen beispielsweise ein Blockieren eines Ausführens zu erwartender und potentiell problematischer Instruktionen, ein Verzögern des Ausführens der entsprechenden Instruktionen und/oder ein Auslagern des Ausführens der entsprechenden Instruktionen auf eine Ausweichkomponente des Computersystems 100 oder ein Ausweichcomputersystem.

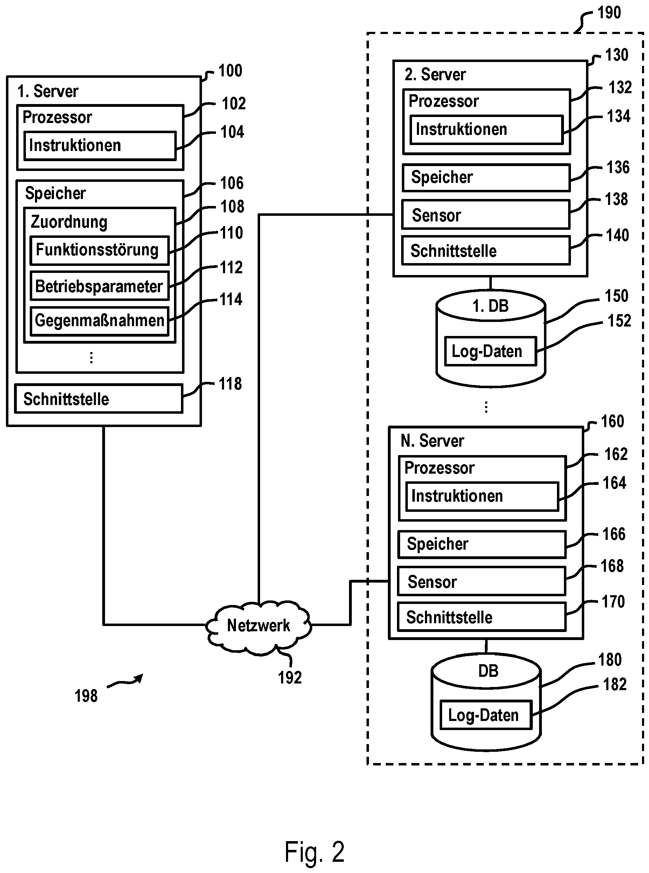

Figur 2 zeigt ein verteiltes Computersystem 198 mit einem Server 100 zum Analysieren von Log-Daten 152, 182. Bei dem Server 100 handelt es sich beispielsweise um das Computersystem 100 aus Figur 1. Beispielsweise erfasst das Computersystem 100 selbst keine Log-Daten. Beispielsweise erfasst das Computersystem 100 auch selbst Log-Daten. Bei den analysierten und überwachten Log-Daten 152, 182 handelt es sich beispielsweise um Log-Daten von Servern 130, 160 einer Servergruppe 190 mit einer Mehrzahl von N Servern des verteilten Computersystems 198, wobei N eine natürliche Zahl größer 1 ist. Die Server 130, 160 der Servergruppe 190 umfassen beispielsweise jeweils einen Prozessor 132, 162 zum Ausführen von Programminstruktionen 134, 164, einen Speicher 136, 166, und eine Kommunikationsschnittstelle 140, 170. Die Server 130, 160 sind beispielsweise dazu konfiguriert jeweils Log-Daten 152, 182 in Form von Log-Datensätzen in einer Datenbank 150, 180 zu protokollieren. Zum Erfassen von der Log-Daten 152, 182 können die Server 130, 160 beispielsweise zusätzlich ein oder mehrere Sensoren 138, 168 umfassen.

Die Server 150, 160 der Servergruppe 190 kommunizieren beispielsweise über ein Netzwerk 192 untereinander und mit dem ersten Server 100. Bei dem Netzwerk 192 handelt es sich beispielsweise um öffentliches Netzwerk, wie etwa das Internet, oder ein privates Netzwerk, wie etwa ein Intranet und/oder ein internes Kommunikationsnetzwerk des verteilten Computersystems 198.

Auf ein Auftreten einer Funktionsstörung auf einem oder mehreren der Server 150, 160 der Servergruppe 190 hin wird beispielsweise eine Störmeldung an den ersten Server 100 gesendet. Die Störungsmeldung gibt beispielsweise Art und Zeit der aufgetretenen Funktionsstörung sowie den oder die von der Funktionsstörung betroffenen Server an. Der erste Server 100 fragt auf den Erhalt der Störmeldung hin Log-Daten aus den Datenbanken 150, 180 an, welche innerhalb eines der Funktionsstörung unmittelbar vorangehenden vordefinierten Zeitintervalls protokolliert wurden. Der erste Server 100 empfängt auf seine Anfrage hin die entsprechenden Log-Daten und führt eine Anomalieanalyse unter Verwendung dieser Log-Daten aus. Im Zuge der Anomalieanalyse werden ein oder mehreren Anomalien innerhalb der empfangenen Log-Daten, d.h., erster Log-Datensätze der Log-Daten 152, 182, bestimmt, deren protokollierte Werte innerhalb eines der Funktionsstörung unmittelbar vorangehenden vordefinierten ersten Zeitintervalls erfasst wurden. Anomalien treten jeweils in Form von Kombinationen von Werten von Betriebsparametern der überwachten Computersystem 130, 160, für welche sich ein erster Unterschied in einer ersten Wahrscheinlichkeit eines Auftretens der entsprechenden Werte innerhalb der ersten Log-Datensätze mindestens um einen vordefinierten Größenwert von einem zweiten Unterschied in einer zweiten Wahrscheinlichkeit eines Auftretens der entsprechenden Werte innerhalb von zweiten Log-Datensätze der protokollierten Log-Daten 152, 192 unterscheidet, deren Werte in einem vordefinierten zweiten Zeitintervall erfasst wurden. Basierend auf dieser Anomalieanalyse werden diejenigen Betriebsparameter 112 des überwachten Computersystems identifiziert, deren Werte von den bestimmten ein oder mehreren Anomalien umfasst. Beispielsweise werden Angaben zu den Betriebsparametern 112, für deren Werte ein Auftreten einer Anomalie im Falle eines Bevorstehens der Funktionsstörung 110 zu erwarten ist, der entsprechenden Funktionsstörung 110 zugeordnet. Diese Zuordnung 108 wird beispielsweise in dem ersten Server 100 hinterlegt. Ferner können beispielsweise Gegenmaßnah-

men gegen die aufgetretene Funktionsstörung 110 festgelegt und der Zuordnung 108 hinzugefügt werden.

Der erste Server sendet die Zuordnung 108 beispielsweise an die Server 150, 160 der Servergruppe 190, welche die identifizierten Betriebsparameter 112 zur Überwachung der von ihnen protokollierten Log-Daten 152, 182 verwenden. Tritt in den protokollierten Log-Daten 152, 182 eine Anomalie innerhalb der identifizierten Betriebsparameter 112 auf, wird ein bevorstehendes wiederholtes Auftreten der Funktionsstörung 110 vorhergesagt. Beispielsweise sendet der die Funktionsstörung 110 vorhersagende Server 130, 160 einen Warnhinweis über das bevorstehen der Funktionsstörung 110 an die weiteren Server der Servergruppe 190 und/oder an den ersten Server 100. Ferner führt der die Funktionsstörung 110 vorhersagende Server 130, 160 beispielsweise ein oder mehrere von der Zuordnung 108 definierte Gegenmaßnahmen 114 aus. Zusätzlich können ein oder mehrere der den Warnhinweis empfangenden Server der Servergruppe 190 und/oder der erste Server 100 ebenfalls ein oder mehrere von der Zuordnung 108 definierte Gegenmaßnahmen 114 ausführen.

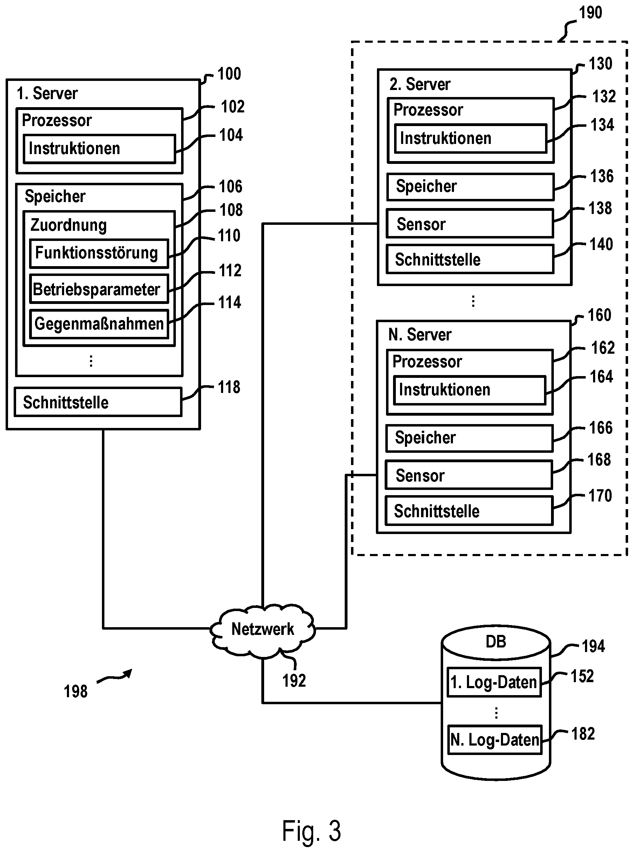

Figur 3 zeigt ein verteiltes Computersystem 198 mit einem Server 100 zum Analysieren von Log-Daten 152, 182, dessen Aufbau und Funktionsweise analog zu dem verteiltes Computersystem 198 der Figur 2 ist. Der Unterschied zu dem verteilten Computersystem 198 der Figur 2 besteht darin, dass die Log-Daten 152, 182 der Server 150, 160 der Servergruppe 190 in einer zentralen Datenbank 194 gespeichert werden, auf welche beispielsweise der erste Server 100 Zugriff besitzt. Auf einen Empfang einer Störmeldung von einem der Server 150, 160 der Servergruppe 190 hin kann der erste Server 100 mithin Log-Daten der einzelnen Server 150, 160, welche innerhalb eines der Funktionsstörung unmittelbar vorangehenden vordefinierten Zeitintervalls protokolliert wurden, aus der zentralen Datenbanken 194 auslesen. Der erste Server 100 führt eine Anomalieanalyse durch und identifiziert Betriebsparameter, deren Werte von den ein oder mehreren Anomalien umfasst sind. Ferner erstellt der erste Server 100 die Zuordnung 108 zwischen den identifizierten Betriebsparametern 110, der Funktionsstörung 110 und gegebenenfalls Gegenmaßnahmen114 gegen die Funktionsstörung 110. Ferner überwacht beispielsweise der erste Server 100 die in der zentralen Datenbank 194 protokollierten Log-Daten 152, 182. Tritt in den protokollierten Log-Daten 152, 182 eine Anomalie innerhalb der identifizierten Betriebsparameter 112 auf, wird ein bevorstehendes wiederholtes, d.h., erneutes, Auftreten der Funktionsstörung 110 von dem ersten Server 100 vorhergesagt. Beispielsweise sendet der erste Server 100 einen Warnhinweis über das bevorstehen der Funktionsstörung 110 an die Server 130, 150 der Servergruppe 190. Ferner veranlasst der erste Server 100 beispielsweise ein Ausführen von ein oder mehrere von der Zuordnung 108 definierte Gegenmaßnahmen 114 durch ein oder mehrere Server 130, 150 der Servergruppe 190 und/oder durch den Server 100.

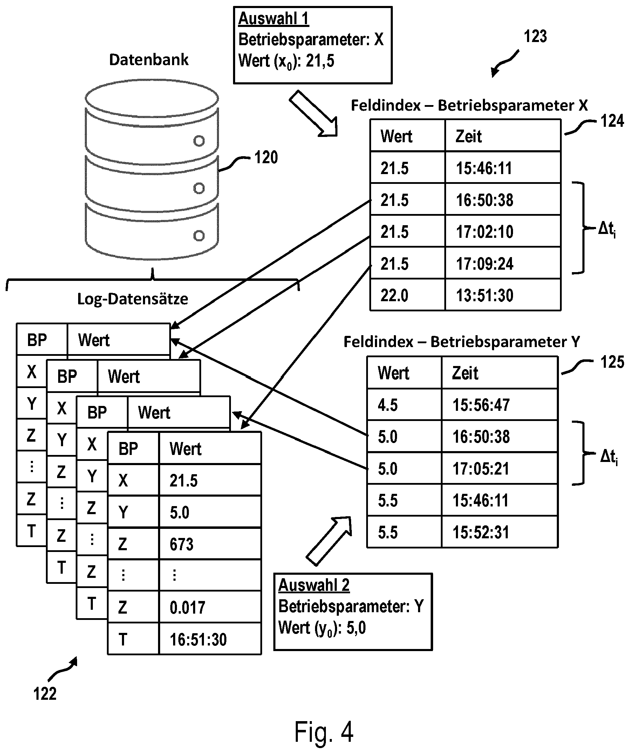

Figur 4 zeigt ein schematisches Diagramm einer exemplarischen Log-Datenanalyse zur Vorhersage einer Funktionsstörung. In einer Datenbank 120 sind Log-Daten 122 in Form von Log-Datensätzen gespeichert. Diese Log-Datensätze umfassen Werte zu einer Mehrzahl von Betriebsparametern X, Y, Z, welche während eines Betriebes eines Computersystems erfasste wurden. Ferner umfassen die Log-Datensätze jeweils eine Zeitangabe T, welche angibt, wann die protokollierten Werte erfasst wurden. Ferner wird beispielsweise eine normalisierte Indexstruktur 123 bereitgestellt. Diese Indexstruktur 123 führt die in den Log-Datensätzen der Log-Daten 122 für die Betriebsparameter gespeicherten Werte auf.

Beispielsweise umfasst die Indexstruktur 123 eine Mehrzahl von Teilindizes 124, 125. Die Teilindizes 124, 125 umfassen beispielsweise jeweils die erfassten Werte für einen der Betriebsparameter. Beispielsweise erfasst ein erster Teilindex 124 die Werte des Betriebsparameters X, d.h. stellt einen Feldindex für den Betriebsparameter X bereit. Beispielsweise erfasst ein zweiter Teilindex 125 die Werte des Betriebsparameters Y, d.h. stellt einen Feldindex für den Betriebsparameter Y bereit. Die Indexstruktur 123 kann beispielsweise weitere (nicht dargestellte) Teilindizes für die weiteren Betriebsparameter Z der Log-Daten 122 umfassen. Beispielsweise umfassen die Teilindizes 124, 125 zudem jeweils eine Zeitangabe, welche angibt, wann die entsprechenden Werte erfasst wurden.

Soll nun ein Unterschied einer Wahrscheinlichkeit eines Auftretens für Werte zweier Betriebsparameter, beispielsweise X und Y, bestimmt werden, werden für jeden dieser Betriebsparameter jeweils Werte ausgewählt. Beispielsweise wird für den ersten Betriebsparameter X ein erster Wert $x_0$ ausgewählt, z.B. 21,5, und für den zweiten Betriebsparameter Y ein zweiter Wert $y_0$, z.B. 5,0. Für diese ausgewählten Werte wird ein Unterschied in der Wahrscheinlichkeit eines Auftretens innerhalb eines bestimmten Zeitintervalls $\Delta t_i$ bestimmt. Hierzu wird in den Log-Daten 122 unter Verwendung der Indexstruktur 123 geprüft, in welchen Log-Datensätzen aus dem Zeitintervall $\Delta t_i$ die entsprechenden Werte vorkommen.

Beispielsweise wird der entsprechende Unterschied in der Wahrscheinlichkeit eines Auftretens des ersten Werts $x_0$ des ersten Betriebsparameters X und des zweiten Werts $y_0$ des zweiten Betriebsparameters Y innerhalb der Log-Datensätze des Zeitintervalls $\Delta t_i$ definiert als

$$\frac{1}{2}\|p_{Z|X=x_0} - p_{Z|Y=y_0}\|_1 = \frac{1}{2} \cdot \sum_Z \sum_{z \in V(Z)} |p_{Z|X=x_0}(z) - p_{Z|Y=y_0}(z)|.$$

Die Summation läuft über alle weiteren, d.h. über dritte Betriebsparameter Z und deren Werte, d.h. über alle dritten Werte z, welche für die entsprechenden weiteren Betriebsparameter Z innerhalb der Log-Datensätze der Datenbank 120 protokolliert sind. V(Z) ist die Menge aller protokollierter dritter Werte z der dritten Betriebsparameter Z. Der Faktor ½ dient der Normalisierung, um sicherzustellen, dass die Wahrscheinlichkeitsdifferenz zwischen 0 und 1 liegt. Beispielsweise können für den Faktor auch andere Werte verwendet werden.

Eine Wahrscheinlichkeit eines Auftretens eines bestimmten dritten Werts z aus der Menge der dritten Werte eines weiteren dritten Betriebsparameters Z aus der Menge der dritten Betriebsparameter, über welche summiert wird, in Kombination mit dem ersten Wert $x_0$ des ersten Betriebsparameters X ist definiert als

$$p_{Z|X=x_0}(z) = \frac{\left|I_Z(z) \cap I_X^{\triangle t_i}(x_0)\right|}{\left|I_X^{\triangle t_i}(x_0)\right|}.$$

$I_X^{\triangle t_i}(x_0)$ ist die Menge der Log-Datensätze des entsprechenden vordefinierten Zeitintervalls $\triangle t_i$, welche den ersten Wert $x_0$ für den ersten Betriebsparameter X umfassen. $I_Z(z)$ ist die Menge der Log-Datensätze der Datenbank, welche den dritten Wert z für den weiteren dritten Betriebsparameter Z umfassen. Die Schnittmenge $I_Z(z) \cap I_X^{\triangle t_i}(x_0)$ ist somit die Menge aller Log-Datensätze des vordefinierten Zeitintervalls $\triangle t_i$, welche sowohl den bestimmten dritten Wert z des weiteren dritten Betriebsparameters Z, als auch den ersten Wert $x_0$ des ersten Betriebsparameters X umfassen.

Eine Wahrscheinlichkeit eines Auftretens eines bestimmten dritten Werts z aus der Menge der dritten Werte eines weiteren dritten Betriebsparameters Z aus der Menge der dritten Betriebsparameter, über welche summiert wird, in Kombination mit dem zweiten Wert $y_0$ des zweiten Betriebsparameters Y ist definiert als

$$p_{Z|Y=y_0}(z) = \frac{\left|I_Z(z) \cap I_Y^{\triangle t_i}(y_0)\right|}{\left|I_Y^{\triangle t_i}(y_0)\right|}.$$

$I_Y^{\triangle t_i}(y_0)$ ist die Menge der Log-Datensätze des entsprechenden vordefinierten Zeitintervalls $\triangle t_i$ ist, welche den zweiten Wert $y_0$ für den zweiten Betriebsparameter Y umfassen. Die Schnittmenge $I_Z(z) \cap I_Y^{\triangle t_i}(y_0)$ ist somit die Menge aller Log-Datensätze des vordefinierten Zeitintervalls $\triangle t_i$, welche sowohl den bestimmten dritten Wert z des weiteren dritten Betriebsparameters Z, als auch den zweiten Wert $y_0$ des zweiten Betriebsparameters Y umfassen.

Beispielsweise ist der Unterschied in der Wahrscheinlichkeit des Auftretens des ersten Werts $x_0$ des ersten Betriebsparameters X des Wertepaars und des zweiten Werts $y_0$ des zweiten Betriebsparameters Y des Wertepaars innerhalb der Log-Datensätze des Zeitintervalls $\triangle t_i$ definiert als ein redundanzfreier Unterschied der Form:

$$\frac{1}{2}\left(\|p_{Z|X=x_0 \wedge Y=y_0} - p_{Z|X=x_0}\|_1 - \|p_{Z|X=x_0 \wedge Y=y_0} - p_{Z|Y=y_0}\|_1\right).$$

Der Faktor ½ dient der Normalisierung, um sicherzustellen, dass die Wahrscheinlichkeitsdifferenz zwischen 0 und 1 liegt. Nach alternativen Ausführungsformen können für den Faktor auch andere Werte verwendet werden. Dabei gilt:

$$\frac{1}{2}\|p_{Z|X=x_0 \wedge Y=y_0} - p_{Z|X=x_0}\|_1 = \frac{1}{2} \cdot \sum_Z \sum_{z \in V(Z)} |p_{Z|X=x_0 \wedge Y=y_0}(z) - p_{Z|X=x_0}(z)|,$$

$$\frac{1}{2}\|p_{Z|X=x_0 \wedge Y=y_0} - p_{Z|Y=y_0}\|_1 = \frac{1}{2} \cdot \sum_Z \sum_{z \in V(Z)} |p_{Z|X=x_0 \wedge Y=y_0}(z) - p_{Z|Y=y_0}(z)|.$$

Eine Wahrscheinlichkeit eines Auftretens eines bestimmten dritten Werts z eines weiteren dritten Betriebsparameters Z aus der Menge der dritten Betriebsparameter, über welche summiert wird, in Kombination mit dem ersten Wert $x_0$ des ersten Betriebsparameters X sowie dem zweiten Wert $y_0$ des zweiten Betriebsparameters Y ist definiert als

$$p_{Z|X=x_0 \wedge Y=y_0}(z) = \frac{\left| I_Z(z) \cap I_X^{\triangle t_i}(x_0) \cap I_Y^{\triangle t_i}(y_0) \right|}{\left| I_X^{\triangle t_i}(x_0) \cap I_Y^{\triangle t_i}(y_0) \right|}.$$

$I_X^{\triangle t_i}(x_0)$ ist die Menge der Log-Datensätze des entsprechenden vordefinierten Zeitintervalls $\triangle t_i$, welche den ersten Wert $x_0$ für den ersten Betriebsparameter X umfassen. $I_Y^{\triangle t_i}(y_0)$ ist die Menge der Log-Datensätze des entsprechenden vordefinierten Zeitintervalls $\triangle t_i$ ist, welche den zweiten Wert $y_0$ für den zweiten Betriebsparameter Y umfassen. $I_Z(z)$ ist die Menge der Log-Datensätze der Datenbank, welche den dritten Wert z für den weiteren dritten Betriebsparameter Z umfassen. Die Schnittmenge $I_Z(z) \cap I_X^{\triangle t_i}(x_0) \cap I_Y^{\triangle t_i}(y_0)$ ist somit die Menge aller Log-Datensätze des vordefinierten Zeitintervalls $\triangle t_i$, welche sowohl den bestimmten dritten Wert z des weiteren dritten Betriebsparameters Z, als auch den ersten Wert $x_0$ des ersten Betriebsparameters X und den zweiten Wert $y_0$ des zweiten Betriebsparameters Y umfassen.

Basierend auf der Indexabfrage der Indexstruktur 123 kann die Anzahl der Log-Datensätze innerhalb des Zeitintervalls $\triangle t_i$ bestimmt werde, welche Feld x mit dem Wert 21,5 und Feld y mit dem Wert 5,0 umfassen. Basierend darauf kann die Wahrscheinlichkeit für ein Auftreten der entsprechenden Werte sowie der Unterschied der Wahrscheinlichkeiten bestimmt werden.

Nach Ausführungsformen kann es sich bei den vorgenannten Wahrscheinlichkeiten für ein Auftreten von Werten von Betriebsparametern in den Log-Datensätzen beispielsweise um Wahrscheinlichkeiten für ein Auftreten von bestimmten diskreten Werten handeln. Beispielsweise umfasst ein Log-Datensatz einen Wert $x_0$ für einen Betriebsparameter X, wenn der entsprechende Log-Datensatz den diskreten Wert $x_0$ für den Betriebsparameter X identisch umfasst. Beispielsweise umfasst ein Log-Datensatz einen Wert $y_0$ für einen Betriebsparameter Y, wenn der entsprechende Log-Datensatz den diskreten Wert $y_0$ für den Betriebsparameter Y identisch umfasst. Beispielsweise umfasst ein Log-Datensatz einen Wert z für einen Betriebsparameter Z, wenn der entsprechende Log-Datensatz den diskreten Wert z für den Betriebsparameter Z identisch umfasst.

Nach Ausführungsformen kann es sich bei den vorgenannten Wahrscheinlichkeiten für ein Auftreten von Werten von Betriebsparametern in den Log-Datensätzen beispielsweise um Wahrscheinlichkeiten für ein Auftreten von Werten aus bestimmten Werteintervallen handeln. Beispielsweise steht der Wert $x_0$ stellvertretenden für ein den Wert $x_0$ umfassendes Werteintervall, etwa ein Werteintervall $(x_1, x_2)$ von $x_1$ bis $x_2$ mit $x_0 \in (x_1, x_2)$. Beispielsweise umfasst ein Log-Datensatz in diesem Fall einen Wert $x_0$ für einen Betriebsparameter X, wenn der entsprechende Log-Datensatz irgendeinen Wert $x_i \in (x_1, x_2)$ für den Betriebsparameter X umfasst. Beispielsweise steht der Wert $y_0$ stellvertretenden für ein den Wert $y_0$ umfassendes Werteintervall, etwa ein Werteintervall $(y_1, y_2)$ von $y_1$ bis $y_2$ mit $y_0 \in (y_1, y_2)$. Beispielsweise umfasst ein Log-Datensatz in diesem Fall einen Wert $y_0$ für einen Betriebsparameter Y, wenn der entsprechende Log-Datensatz irgendeinen Wert $y_i \in (y_1, y_2)$ für den Betriebsparameter Y umfasst. Beispielsweise steht der Wert z stellvertretenden für ein den Wert z umfassendes Werteintervall, etwa ein Werteintervall $(z_1, z_2)$ von $z_1$ bis $z_2$ mit $z \in (z_1, z_2)$. Beispielsweise umfasst ein Log-Datensatz in diesem Fall einen Wert z für einen Betriebsparameter Z, wenn der entsprechende Log-Datensatz irgendeinen Wert $z_i \in (z_1, z_2)$ für den Betriebsparameter Z umfasst.

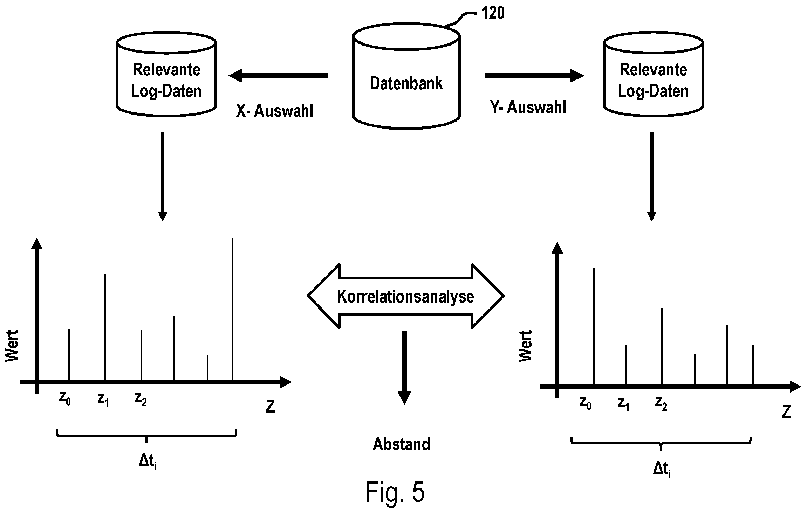

Figur 5 zeigt eine weitere schematische Darstellung der exemplarischen Log-Datenanalyse aus Figur 4. Aus der Datenbank 120 werden die relevanten Log-Daten für die X-Auswahl, d.h. diejenigen Log-Datensätze aus dem Zeitintervall $\triangle t_i$, die den Wert $x_0$ für den Betriebsparameter X umfassen, extrahiert. Diese Log-Datensätze umfassen beispielsweise die dargestellten Werte $z_0$, $z_1$, $z_2$, etc. für die weiteren Betriebsparameter Z. Ferner werden aus der Datenbank 120 die relevanten Log-Daten für die Y-Auswahl, d.h. diejenigen Log-Datensätze aus dem Zeitintervall $\triangle t_i$, die den Wert $y_0$ für den Betriebsparameter Y umfassen, extrahiert. Diese Log-Datensätze umfassen beispielsweise die dargestellten Werte $z_0$, $z_1$, $z_2$, etc. für die weiteren Betriebsparameter Z. Unter Verwendung der jeweiligen Werte $z_0$, $z_1$, $z_2$, etc. für die weiteren Betriebsparameter Z wird eine Korrelationsanalyse vorgenommen. Das Ergebnis dieser Korrelationsanalyse ist ein Grad der Korrelation zwischen den beiden Werten $x_0$ und $y_0$ für die beiden Betriebsparameter X und Y. Der Grad der Korrelation wird auch als Abstand bezeichnet. Hierbei handelt es sich um den oben beschriebenen Unterschied in der Wahrscheinlichkeit eines Auftretens der beiden Werten $x_0$ und $y_0$ für die beiden Betriebsparameter X und Y in den Log-Datensätzen des Zeitintervalls $\triangle t_i$. Je geringer der Unterschied, desto größer die Korrelation. Desto größer der Unterschied, desto geringer die Korrelation. Zunächst werden im Zuge einer Anomalieanalyse beispielsweise diejenigen Betriebsparameter identifiziert, etwa die beiden Betriebsparameter X und Y, deren Unterschied eine Anomalie in einem einer Funktionsstörung unmittelbar vorangehenden vordefinierten Zeitintervall aufweist. Eine

Anomalie liegt vor, wenn die für das der Funktionsstörung unmittelbar vorangehende vordefinierte Zeitintervall

**EP 4 350 517 A1**

bestimmte Korrelation signifikant von einer Referenzkorrelation eines Referenzzeitintervalls $\Delta t_j$ abweicht, d.h. der Unterschied größer oder gleich einem vordefinierten Größenwert ist.

Diese identifizierten Betriebsparameter X und Y werden dann im Zuge einer Überwachung der protokollierten Werte, wie in Figur 5 gezeigt, auf ihre Korrelation hin geprüft. Weicht die für das überwachte Zeitintervall $\Delta t_i$ bestimmte Korrelation signifikant von einer Referenzkorrelation eines Referenzzeitintervalls $\Delta t_j$ ab, d.h. ist der Unterschied größer oder gleich einem vordefinierten Größenwert, stellt dies ein Indiz für ein bevorstehendes wiederholtes Auftreten der Funktionsstörung dar.

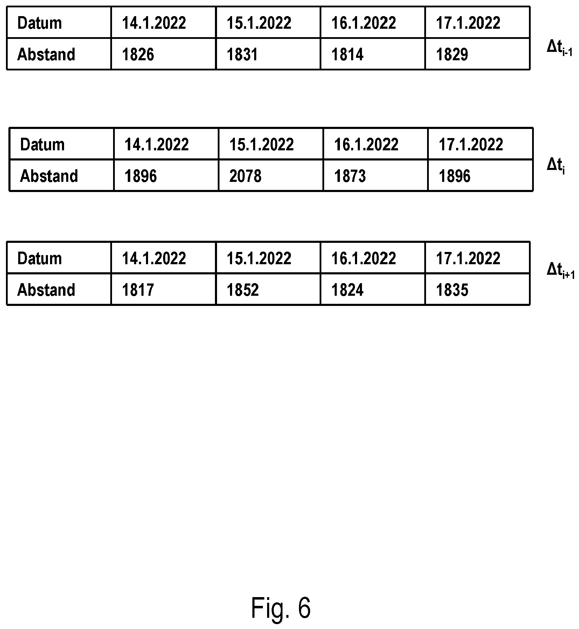

Figur 6 zeigt exemplarische Abstände der beiden Werten $x_0$ und $y_0$ für die beiden Betriebsparameter X und Y aus Figur 5 im Zuge einer Log-Datenanalyse zur Vorhersage einer Funktionsstörung. Es werden exemplarisch für unterschiedliche Zeitintervalle $\Delta t_{i-1}$, $\Delta t_i$, $\Delta t_{i+1}$, an vier unterschiedlichen Tagen, z.B. "14.1.2022", "15.1.2022", "16.1.2022", "17.1.2022", die jeweiligen Abstände zwischen den Werten $x_0$ und $y_0$ für die beiden Betriebsparameter X und Y dargestellt. Die Abstände sind in diesem Fall nicht normiert, d.h. liegen nicht im Intervall von 0 bis 1. Der Abstand zwischen den Werten $x_0$ und $y_0$ für die beiden Betriebsparameter X und Y für das Zeitintervall $\Delta t_i$ am 15.1.2022 unterscheidet sich deutlich von den anderen Abständen. Mithin liegt hier eine Anomalie vor. Beispielsweise ist am Ende des Zeitintervalls $\Delta t_i$ am 15.1.2022 eine Funktionsstörung aufgetreten. Somit kann ein Auftreten einer Anomalie, wie der in Figur 6 für das Zeitintervall $\Delta t_i$ am 15.1.2022 gezeigten Anomalie, als ein Indiz für ein bevorstehendes wiederholtes Auftreten der entsprechenden Funktionsstörung verwendet werden. Wird eine entsprechende Anomalie erfasst, wird ein bevorstehendes Auftreten der entsprechenden Funktionsstörung vorhergesagt.

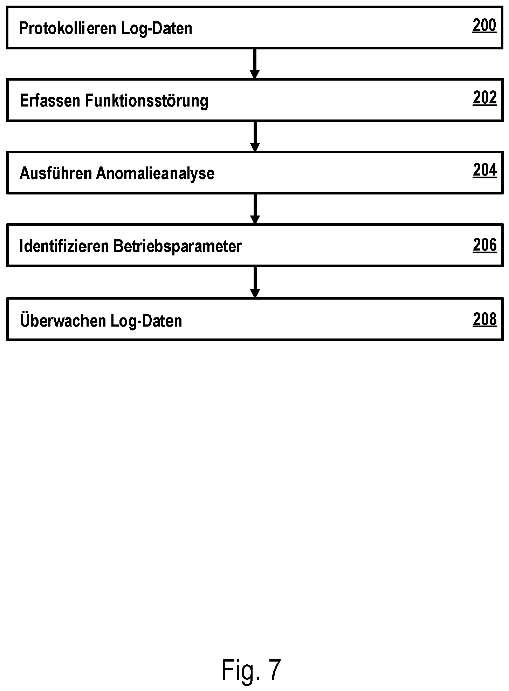

Figur 7 zeigt ein exemplarisches Verfahren zum Analysieren von Log-Daten. In Block 200 werden Log-Daten protokolliert. Hierzu werden die entsprechenden Log-Daten umfassende Log-Datensätze in einer Datenbank gespeichert. Die gespeicherten Log-Datensätze umfassen während des Betriebes des Computersystems erfasste Werte zu einer Mehrzahl von Betriebsparametern des Computersystems. Ferner umfassen die Log-Datensätze jeweils eine Zeitangabe, welche angibt, wann die protokollierten Werte erfasst wurden. In Block 202 wird eine Funktionsstörung erfasst, auf deren Erfassen hin in Block 204 eine Anomalieanalyse ausgeführt wird. Die Anomalieanalyse umfasst ein Bestimmen von ein oder mehreren Anomalien innerhalb erster Log-Datensätze der protokollierten Log-Datensätze, deren protokollierte Werte innerhalb eines der Funktionsstörung unmittelbar vorangehenden vor-definierten ersten Zeitintervalls erfasst wurden. Die Anomalien sind dabei jeweils eine Kombination von Werten von Betriebsparametern des Computersystems, für welche sich ein erster Unterschied in einer ersten Wahrscheinlichkeit eines Auftretens der entsprechenden Werte innerhalb der ersten Log-Datensätze mindestens um einen vordefinierten Größenwert von einem zweiten Unterschied in einer zweiten Wahrscheinlichkeit eines Auftretens der entsprechenden Werte innerhalb von zweiten Log-Datensätze der protokollierten Log-Datensätze unterscheidet, deren Werte in einem vordefinierten zweiten Zeitintervall erfasst wurden. In Block 206 werden diejenigen Betriebsparameter des Computersystems identifiziert, deren Werte von den bestimmten ein oder mehreren Anomalien umfasst sind. Ferner wird beispielsweise eine Zuordnung der identifizierten Betriebsparameter zu der in Block 202 erfassten Funktionsstörung erstellt. Diese Zuordnung wird beispielsweise für eine Überwachung zukünftig protokollierter Log-Datensätze gespeichert. In Block 208 werden die für die identifizierten Betriebsparameter des Computersystems in den Log-Datensätzen protokollierten Werte überwacht. Bei den überwachten Log-Datensätzen handelt es sich beispielsweise um Log-Datensätze neu protokollierter Log-Daten, d.h. von Log-Daten, welche beispielsweise nach dem Ausführen der Blöcke 200 bis 206 protokolliert werden.

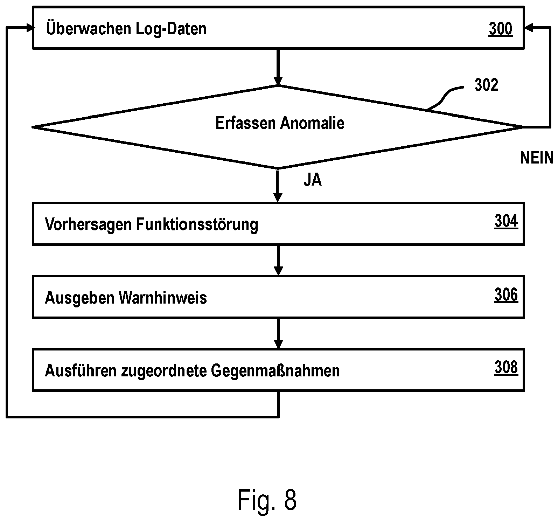

Figur 8 zeigt ein exemplarisches Verfahren zur Vorhersage eines wiederholten Auftretens einer Funktionsstörung eines Computersystems unter Verwendung von Betriebsparametern, welche beispielsweise wie in dem in Figur 7 gezeigten Verfahren identifiziert wurden. Beispielsweise wird eine entsprechende Zuordnung der identifizierten Betriebsparameter zu der Funktionsstörung verwendet. In Block 300 werden protokollierte Log-Daten überwacht. Dabei werden die für die identifizierten Betriebsparameter in den Log-Datensätzen protokollierten Werte überwacht und geprüft, ob eine Anomalie erfasst wird. Eine Anomalie wird erfasst, falls Werte für die identifizierten Betriebsparameter des Computersystems innerhalb eines vordefinierten dritten Zeitintervalls erfasst werden, für welche sich ein dritter Unterschied in einer dritten Wahrscheinlichkeit eines Auftretens der entsprechenden Werte innerhalb von dritten Log-Datensätzen der protokollierten Log-Datensätze, deren protokollierte Werte innerhalb des vordefinierten dritten Zeitintervalls erfasst werden, mindestens um den vordefinierten Größenwert von dem zweiten Unterschied in der zweiten Wahrscheinlichkeit des Auftretens der entsprechenden Werte innerhalb der zweiten Log-Datensätze unterscheidet. Wird keine Anomalie für die identifizierten Betriebsparameter erfasst, wird die Überwachung der Log-Daten in Block 300 unverändert fortgesetzt. Wird eine Anomalie für die identifizierten Betriebsparameter erfasst, wird das Verfahren in Block 304 fortgesetzt. In Block 304 wird ein bevorstehendes wiederholtes Auftreten der Funktionsstörung vorhergesagt, welche den identifizierten Betriebsparametern zugeordnet ist. In Block 306 wird beispielsweise ein Warnhinweis über die bevorstehende Funktionsstörung ausgegeben. In Block 308 werden beispielsweise hinterlegte Gegenmaßnahmen ausgeführt, welche ebenfalls der charakteristischen Merkmalskombination und/oder der vorhergesagten Funktionsstörung zugeordnet sind.

**Bezugszeichenliste**

| | |
|---|---|
| 100 | Computersystem |
| 102 | Prozessor |
| 104 | Programminstruktionen |
| 106 | Speicher |
| 108 | Zuordnung |
| 110 | Funktionsstörung |
| 112 | Betriebsparameter |
| 114 | Gegenmaßnahmen |
| 116 | Sensor |
| 118 | Kommunikationsschnittstelle |
| 120 | Datenbank |
| 122 | Log-Daten |
| 123 | Indexstruktur |
| 124 | Teilindex |
| 125 | Teilindex |
| 130 | Server |
| 132 | Prozessor |
| 134 | Programminstruktionen |
| 136 | Speicher |
| 138 | Sensor |
| 140 | Kommunikationsschnittstelle |
| 150 | Datenbank |
| 152 | Log-Daten |
| 160 | Server |
| 162 | Prozessor |
| 164 | Programminstruktionen |
| 166 | Speicher |
| 168 | Sensor |
| 170 | Kommunikationsschnittstelle |
| 180 | Datenbank |
| 182 | Log-Daten |
| 190 | Servergruppe |
| 192 | Netzwerk |
| 194 | Datenbank |
| 196 | Log-Datum |
| 198 | verteiltes Computersystem |

**Patentansprüche**

1. Verfahren zur Vorhersage eines wiederholten Auftretens einer Funktionsstörung (110) eines Computersystems (100, 130, 160, 198) unter Verwendung von protokollierten Log-Daten (122, 152, 182, 196) des Computersystems (100, 130, 160, 198), wobei das Verfahren umfasst:

• Protokollieren von Log-Daten (122, 152, 182, 196), wobei das Protokollieren der Log-Daten (122, 152, 182, 196) ein Speichern von Log-Datensätzen in einer Datenbank (120, 150, 180, 194) umfasst, wobei die Log-Datensätze während des Betriebes des Computersystems (100, 130, 160, 198) erfasste Werte zu einer Mehrzahl von Betriebsparametern des Computersystems (100, 130, 160, 198) umfassen, wobei die Log-Datensätze ferner jeweils eine Zeitangabe umfassen, welche angibt, wann die protokollierten Werte erfasst wurden,
• auf ein Auftreten der Funktionsstörung (110) des Computersystems (100, 130, 160, 198) hin, Ausführen einer Anomalieanalyse, wobei die Anomalieanalyse ein Bestimmen von ein oder mehreren Anomalien innerhalb erster Log-Datensätze der protokollierten Log-Datensätze umfasst, deren protokollierte Werte innerhalb eines der Funktionsstörung (110) unmittelbar vorangehenden vordefinierten ersten Zeitintervalls erfasst wurden, wobei die Anomalien jeweils eine Kombination von Werten von Betriebsparametern des Computersystems (100, 130, 160, 198) sind, für welche sich ein erster Unterschied in einer ersten Wahrscheinlichkeit eines Auftretens der entsprechenden Werte innerhalb der ersten Log-Datensätze mindestens um einen vordefinierten Größenwert von einem zweiten Unterschied in einer zweiten Wahrscheinlichkeit eines Auftretens der entsprechenden Werte innerhalb von zweiten Log-Datensätze der protokollierten Log-Datensätze unterscheidet, deren Werte in einem vordefinierten zweiten Zeitintervall erfasst wurden,
• Identifizieren derjenigen Betriebsparameter (112) des Computersystems (100, 130, 160, 198), deren Werte von den bestimmten ein oder mehreren Anomalien umfasst sind,
• Überwachen der für die identifizierten Betriebsparameter (112) des Computersystems (100, 130, 160, 198) in den Log-Datensätzen protokollierten Werte, wobei das Überwachen ein Vorhersagen eines bevorstehenden wiederholten Auftretens der Funktionsstörung (110) umfasst, falls Werte für die identifizierten Betriebsparameter (112) des Computersystems (100, 130, 160, 198) innerhalb eines vordefinierten dritten Zeitintervalls erfasst werden, für welche sich ein dritter Unterschied in einer dritten Wahrscheinlichkeit eines Auftretens der entsprechenden Werte innerhalb von dritten Log-Datensätzen der protokollierten Log-Datensätze, deren protokollierte Werte innerhalb des vordefinierten dritten Zeitintervalls erfasst werden, mindestens um den vordefinierten Größenwert von dem zweiten Unterschied in der zweiten Wahrscheinlichkeit des Auftretens der entsprechenden Werte innerhalb der zweiten Log-Datensätze unterscheidet.

2. Verfahren nach Anspruch 1, wobei es sich bei den Kombinationen von Werten jeweils um Wertepaare handelt.

3. Verfahren nach Anspruch 2, wobei der Unterschied in der Wahrscheinlichkeit eines Auftretens eines ersten Werts $x_0$ eines ersten Betriebsparameters X eines Wertepaars und eines zweiten Werts $y_0$ eines zweiten Betriebsparameters Y des Wertepaars innerhalb der Log-Datensätze eines der vordefinierten Zeitintervalle $\Delta t_i$ definiert ist als

$$\frac{1}{2}\|p_{Z|X=x_0} - p_{Z|Y=y_0}\|_1 = \frac{1}{2} \cdot \sum_Z \sum_{z \in V(Z)} |p_{Z|X=x_0}(z) - p_{Z|Y=y_0}(z)|,$$

wobei die Summation über alle weiteren dritten Betriebsparameter Z und alle dritten Werte z läuft, welche für den weiteren dritten Betriebsparameter Z innerhalb der Log-Datensätze der Datenbank (120, 150, 180, 194) protokolliert sind,
wobei eine Wahrscheinlichkeit eines Auftretens eines dritten Werts z eines weiteren dritten Betriebsparameters Z in Kombination mit dem ersten Wert $x_0$ des ersten Betriebsparameters X definiert ist als

$$p_{Z|X=x_0}(z) = \frac{\left|I_Z(z) \cap I_X^{\triangle t_i}(x_0)\right|}{\left|I_X^{\triangle t_i}(x_0)\right|},$$

wobei $I_X^{\triangle t_i}(x_0)$ die Menge der Log-Datensätze des entsprechenden vordefinierten Zeitintervalls $\Delta t_i$ ist, welche den ersten Wert $x_0$ für den ersten Betriebsparameter X umfassen, wobei $I_Z(z)$ die Menge der Log-Datensätze der Datenbank (120, 150, 180, 194) ist, welche den dritten Wert z für den weiteren dritten Betriebsparameter Z umfassen,
wobei eine Wahrscheinlichkeit eines Auftretens eines dritten Werts z eines weiteren dritten Betriebsparameters Z in Kombination mit dem zweiten Wert $y_0$ des zweiten Betriebsparameters Y definiert ist als

$$p_{Z|Y=y_0}(z) = \frac{\left|I_Z(z) \cap I_Y^{\triangle t_i}(y_0)\right|}{\left|I_Y^{\triangle t_i}(y_0)\right|},$$

wobei $I_Y^{\triangle t_i}(y_0)$ die Menge der Log-Datensätze des entsprechenden vordefinierten Zeitintervalls $\Delta t_i$ ist, welche den zweiten Wert $y_0$ für den erste Betriebsparameter Y umfassen.

4. Verfahren nach Anspruch 2, wobei der Unterschied in der Wahrscheinlichkeit des Auftretens des ersten Werts $x_0$ des ersten Betriebsparameters X des Wertepaars und des zweiten Werts $y_0$ des zweiten Betriebsparameters Y des Wertepaars innerhalb der Log-Datensätze eines der vordefinierten Zeitintervalle $\Delta t_i$ definiert ist als ein redundanzfreier Unterschied der Form

$$\frac{1}{2}\left(\|p_{Z|X=x_0 \wedge Y=y_0} - p_{Z|X=x_0}\|_1 - \|p_{Z|X=x_0 \wedge Y=y_0} - p_{Z|Y=y_0}\|_1\right),$$

wobei

$$\frac{1}{2}\|p_{Z|X=x_0 \wedge Y=y_0} - p_{Z|X=x_0}\|_1 = \frac{1}{2} \cdot \sum_Z \sum_{z \in V(Z)} |p_{Z|X=x_0 \wedge Y=y_0}(z) - p_{Z|X=x_0}(z)|$$

und

$$\frac{1}{2}\|p_{Z|X=x_0 \wedge Y=y_0} - p_{Z|Y=y_0}\|_1 = \frac{1}{2} \cdot \sum_Z \sum_{z \in V(Z)} |p_{Z|X=x_0 \wedge Y=y_0}(z) - p_{Z|Y=y_0}(z)|,$$

wobei

$$p_{Z|X=x_0 \wedge Y=y_0}(z) = \frac{\left|I_Z(z) \cap I_X^{\triangle t_i}(x_0) \cap I_Y^{\triangle t_i}(y_0)\right|}{\left|I_X^{\triangle t_i}(x_0) \cap I_Y^{\triangle t_i}(y_0)\right|}.$$

5. Verfahren nach einem der vorangehenden Ansprüche, wobei auf die Vorhersage des bevorstehenden wiederholten Auftretens der Funktionsstörung (110) hin ein Warnhinweis ausgegeben wird, und/oder

    wobei auszuführende Gegenmaßnahmen (114) zur Vermeidung der Funktionsstörung (110) festgelegt werden, wobei eine Zuordnung (108) der auszuführenden Gegenmaßnahmen (114) zu der Funktionsstörung (110) gespeichert wird, wobei auf die Vorhersage des bevorstehenden wiederholten Auftretens der Funktionsstörung (110) hin automatisch die der Funktionsstörung (110) zugeordneten Gegenmaßnahmen (114) ausgeführt werden, und/oder

    wobei das Vorhersagen des bevorstehenden wiederholten Auftretens der Funktionsstörung (110) erfolgt, falls die Werte für eine vorbestimmte Mindestanzahl von Betriebsparametern der identifizierten Betriebsparameter (112) des Computersystems (100, 130, 160, 198) innerhalb des vordefinierten dritten Zeitintervalls erfasst werden, für welche sich der dritte Unterschied in der dritten Wahrscheinlichkeit des Auftretens der entsprechenden Werte innerhalb der dritten Log-Datensätzen mindestens um den vordefinierten Größenwert von dem zweiten Unterschied in der zweiten Wahrscheinlichkeit des Auftretens der entsprechenden Werte innerhalb der zweiten Log-Datensätze unterscheidet,

    wobei das Vorhersagen des bevorstehenden wiederholten Auftretens der Funktionsstörung (110) beispielsweise erfolgt, falls die Werte für alle identifizierten Betriebsparameter (112) des Computersystems (100, 130, 160, 198) innerhalb des vordefinierten dritten Zeitintervalls erfasst werden, für welche sich der dritte Unterschied in der dritten Wahrscheinlichkeit des Auftretens der entsprechenden Werte innerhalb der dritten Log-Datensätzen mindestens um den vordefinierten Größenwert von dem zweiten Unterschied in der zweiten Wahrscheinlichkeit des Auftretens der entsprechenden Werte innerhalb der zweiten Log-Datensätze unterscheidet, und/oder

    wobei es sich bei dem vordefinierten Größenwert um einen positiven Größenwert, einen negativen Größenwert oder um den Betrag des Unterschieds zwischen den beiden entsprechenden Unterschieden in den Wahrscheinlichkeiten des Auftretens der entsprechenden Werte handelt, und/oder

    wobei es sich bei dem vordefinierten Größenwert um einen prozentualen Größenwert oder einen absoluten Größenwert handelt, und/oder

    wobei es sich bei der Funktionsstörung (110) um ein Fehlerereignis handelt, und/oder

    wobei es sich bei der Funktionsstörung (110) um ein Überschreiten oder Unterschreiten eines vordefinierten Schwellenwerts handelt, und/oder

    wobei das Speichern der Log-Datensätze ein Erstellen und Speichern eines normalisierten Index (123, 124, 125) der von den Log-Datensätzen umfassten Werte für die Betriebsparameter des Computersystems (100, 130, 160, 198) umfasst, wobei die Anomalieanalyse unter Verwendung des normalisierten Indexes (123, 124, 125) ausgeführt wird.

6. Verfahren nach einem der vorangehenden Ansprüche, wobei es sich bei dem Computersystem (100) um einen ersten Server (100) eines verteilten Computersystems (198) handelt, welches eine Mehrzahl von Servern (100, 130, 160) umfasst, wobei auf jedem der Server der Mehrzahl von Servern (100, 130, 160) jeweils Log-Daten (152, 182, 196) protokolliert werden.

7. Verfahren nach Anspruch 6, wobei das Ausführen der Anomalieanalyse und das Identifizieren derjenigen Betriebsparameter (112), deren Werte von den bestimmten ein oder mehreren Anomalien umfasst sind, durch den ersten Server erfolgt und die identifizierten Betriebsparameter (112) von dem ersten Server an die weiteren Server der Mehrzahl von Servern des verteilten Computersystems (198) weitergeleitet werden, wobei die weiteren Server die identifizierten Betriebsparameter (112) jeweils speichern, wobei das Überwachen der für die identifizierten Betriebsparameter (112) in den Log-Datensätzen (152, 182, 196) protokollierten Werte jeweils durch den die entsprechenden Werte protokollierenden Server der Mehrzahl von Servern erfolgt,

8. wobei die Zuordnung (108) der auszuführenden Gegenmaßnahmen (114) zu der Funktionsstörung (110) beispielsweise jeweils in den einzelnen Servern der Mehrzahl von Servern gespeichert wird und auf die Vorhersage des bevorstehenden wiederholten Auftretens der Funktionsstörung (110) durch einen Server der Mehrzahl von Servern hin beispielsweise die gespeicherten, der Funktionsstörung (110) zugeordneten Gegenmaßnahmen (114) durch den entsprechenden Server der Mehrzahl von Servern automatisch ausgeführt werden.

9. Verfahren nach Anspruch 6, wobei das Ausführen der Anomalieanalyse, das Identifizieren derjenigen Betriebsparameter (112), deren Werte von den bestimmten ein oder mehreren Anomalien umfasst sind, und das Überwachen der für die identifizierten Betriebsparameter (112) in den Log-Datensätzen (152, 182, 196) protokollierten Werte durch den ersten Server erfolgt, wobei auf die Vorhersage des bevorstehenden wiederholten Auftretens der Funktionsstörung (110) hin durch den ersten Server ein oder mehrere Server der Mehrzahl von Servern bestimmt werden, bei welchen das wiederholte Auftreten der Funktionsstörung (110) bevorsteht,

wobei für die ein oder mehreren bestimmten Server durch den ersten Server beispielsweise jeweils ein Warnhinweis ausgegeben wird, und/oder
wobei die Zuordnung (108) der auszuführenden Gegenmaßnahmen (114) zu der Funktionsstörung (110) beispielsweise in dem ersten Server der Servergruppe gespeichert wird und auf die Vorhersage des bevorstehenden wiederholten Auftretens der Funktionsstörung (110) durch den ersten Server hin beispielsweise ein oder mehrere Befehle automatisch an die ein oder mehrere bestimmten Server der Servergruppe gesendet werden, welche die durch die ein oder mehrere bestimmten Server auszuführenden Gegenmaßnahmen (114) definieren, welche der Funktionsstörung (110) zugeordneten sind.

10. Computersystem (100, 130, 160) mit einem Prozessor (102, 132, 162) und einem Speicher (106, 136, 166), wobei in dem Speicher (106, 136, 166) Programminstruktionen (104, 134, 164) gespeichert sind, wobei ein Ausführen der Programminstruktionen (104, 134, 164) durch den Prozessor (102, 132, 162) den Prozessor (102, 132, 162) dazu veranlasst das Computersystem (100, 130, 160) so zu steuern, dass das Computersystem (100, 130, 160) ein Verfahren zur Vorhersage eines wiederholten Auftretens einer Funktionsstörung (110) des Computersystems unter Verwendung von protokollierten Log-Daten (122, 152, 182, 196) des Computersystems (100, 130, 160) ausführt, wobei das Verfahren umfasst:

• Protokollieren von Log-Daten (122, 152, 182, 196), wobei das Protokollieren der Log-Daten (122, 152, 182, 196) ein Speichern von Log-Datensätzen in einer Datenbank (120, 150, 180, 194) umfasst, wobei die Log-Datensätze während des Betriebes des Computersystems (100, 130, 160) erfasste Werte zu einer Mehrzahl von Betriebsparametern des Computersystems (100, 130, 160) umfassen, wobei die Log-Datensätze ferner jeweils eine Zeitangabe umfassen, welche angibt, wann die protokollierten Werte erfasst wurden,
• auf ein Auftreten der Funktionsstörung (110) des Computersystems (100, 130, 160) hin, Ausführen einer Anomalieanalyse, wobei die Anomalieanalyse ein Bestimmen von ein oder mehreren Anomalien innerhalb erster Log-Datensätze der protokollierten Log-Datensätze umfasst, deren protokollierte Werte innerhalb eines der Funktionsstörung (110) unmittelbar vorangehenden vordefinierten ersten Zeitintervalls erfasst wurden, wobei die Anomalien jeweils eine Kombination von Werten von Betriebsparametern des Computersystems (100, 130, 160) sind, für welche sich ein erster Unterschied in einer ersten Wahrscheinlichkeit eines Auftretens der entsprechenden Werte innerhalb der ersten Log-Datensätze mindestens um einen vordefinierten Größenwert von einem zweiten Unterschied in einer zweiten Wahrscheinlichkeit eines Auftretens der entsprechenden Werte innerhalb von zweiten Log-Datensätze der protokollierten Log-Datensätze unterscheidet, deren Werte in einem vordefinierten zweiten Zeitintervall erfasst wurden,
• Identifizieren derjenigen Betriebsparameter (112) des Computersystems (100, 130, 160), deren Werte von den bestimmten ein oder mehreren Anomalien umfasst sind,

• Überwachen der für die identifizierten Betriebsparameter (112) des Computersystems (100, 130, 160) in den Log-Datensätzen protokollierten Werte, wobei das Überwachen ein Vorhersagen eines bevorstehenden wiederholten Auftretens der Funktionsstörung (110) umfasst, falls Werte für die identifizierten Betriebsparameter (112) des Computersystems (100, 130, 160) innerhalb eines vordefinierten dritten Zeitintervalls erfasst werden, für welche sich ein dritter Unterschied in einer dritten Wahrscheinlichkeit eines Auftretens der entsprechenden Werte innerhalb von dritten Log-Datensätzen der protokollierten Log-Datensätze, deren protokollierte Werte innerhalb des vordefinierten dritten Zeitintervalls erfasst werden, mindestens um den vordefinierten Größenwert von dem zweiten Unterschied in der zweiten Wahrscheinlichkeit des Auftretens der entsprechenden Werte innerhalb der zweiten Log-Datensätze unterscheidet.

11. Computersystem (100, 130, 160) nach Anspruch 10, wobei es sich bei den Kombinationen von Werten jeweils um Wertepaare handelt.

12. Computersystem (100, 130, 160) nach Anspruch 11, wobei der Unterschied in der Wahrscheinlichkeit eines Auftretens eines ersten Werts $x_0$ eines ersten Betriebsparameters X eines Wertepaars und eines zweiten Werts $y_0$ eines zweiten Betriebsparameters Y des Wertepaars innerhalb der Log-Datensätze eines der vordefinierten Zeitintervalle $\Delta t_i$ definiert ist als

$$\frac{1}{2}\|p_{Z|X=x_0} - p_{Z|Y=y_0}\|_1 = \frac{1}{2} \cdot \sum_Z \sum_{z \in V(Z)} |p_{Z|X=x_0}(z) - p_{Z|Y=y_0}(z)|,$$

wobei die Summation über alle weiteren dritten Betriebsparameter Z und alle dritten Werte z läuft, welche für den weiteren dritten Betriebsparameter Z innerhalb der Log-Datensätze der Datenbank (120, 150, 180, 194) protokolliert sind,
wobei eine Wahrscheinlichkeit eines Auftretens eines dritten Werts z eines weiteren dritten Betriebsparameters Z in Kombination mit dem ersten Wert $x_0$ des ersten Betriebsparameters X definiert ist als

$$p_{Z|X=x_0}(z) = \frac{\left|I_Z(z) \cap I_X^{\Delta t_i}(x_0)\right|}{\left|I_X^{\Delta t_i}(x_0)\right|},$$

wobei $I_X^{\Delta t_i}(x_0)$ die Menge der Log-Datensätze des entsprechenden vordefinierten Zeitintervalls $\Delta t_i$ ist, welche den ersten Wert $x_0$ für den ersten Betriebsparameter X umfassen, wobei $I_Z(z)$ die Menge der Log-Datensätze der Datenbank (120, 150, 180, 194) ist, welche den dritten Wert z für die weiteren dritten Betriebsparameter Z umfassen,
wobei eine Wahrscheinlichkeit eines Auftretens eines dritten Werts z eines weiteren dritten Betriebsparameters Z in Kombination mit dem zweiten Wert $y_0$ des zweiten Betriebsparameters Y definiert ist als

$$p_{Z|Y=y_0}(z) = \frac{\left|I_Z(z) \cap I_Y^{\Delta t_i}(y_0)\right|}{\left|I_Y^{\Delta t_i}(y_0)\right|},$$

wobei $I_Y^{\Delta t_i}(y_0)$ die Menge der Log-Datensätze des entsprechenden vordefinierten Zeitintervalls $\Delta t_i$ ist, welche den zweiten Wert $y_0$ für den zweiten Betriebsparameter Y umfassen.

13. Computersystem (100, 130, 160) nach Anspruch 11, wobei der Unterschied in der Wahrscheinlichkeit des Auftretens des ersten Werts $x_0$ des ersten Betriebsparameters X des Wertepaars und des zweiten Werts $y_0$ des zweiten Betriebsparameters Y des Wertepaars innerhalb der Log-Datensätze eines der vordefinierten Zeitintervalle $\Delta t_i$ definiert ist als ein redundanzfreier Unterschied der Form

$$\frac{1}{2}\left(\|p_{Z|X=x_0 \wedge Y=y_0} - p_{Z|X=x_0}\|_1 - \|p_{Z|X=x_0 \wedge Y=y_0} - p_{Z|Y=y_0}\|_1\right),$$

wobei

$$\frac{1}{2}\|p_{Z|X=x_0 \wedge Y=y_0} - p_{Z|X=x_0}\|_1 = \frac{1}{2} \cdot \sum_Z \sum_{z \in V(Z)} |p_{Z|X=x_0 \wedge Y=y_0}(z) - p_{Z|X=x_0}(z)|$$

und

$$\frac{1}{2}\|p_{Z|X=x_0 \wedge Y=y_0} - p_{Z|Y=y_0}\|_1 = \frac{1}{2} \cdot \sum_Z \sum_{z \in V(Z)} |p_{Z|X=x_0 \wedge Y=y_0}(z) - p_{Z|Y=y_0}(z)|,$$

wobei

$$p_{Z|X=x_0 \wedge Y=y_0}(z) = \frac{\left| I_Z(z) \cap I_X^{\triangle t_i}(x_0) \cap I_Y^{\triangle t_i}(y_0) \right|}{\left| I_X^{\triangle t_i}(x_0) \cap I_Y^{\triangle t_i}(y_0) \right|}.$$

14. Verteiltes Computersystem (198), welches eine Mehrzahl von Servern (100, 130, 160) umfasst, wobei es sich bei einem ersten Server (100) der Mehrzahl von Servern (100, 130, 160) um das Computersystem (100) nach einem der Ansprüche 10 bis 13 handelt, wobei auf jedem der Server (100, 130, 160) der Mehrzahl von Servern (100, 130, 160) jeweils Log-Daten (152, 182) protokolliert werden.

15. Verteiltes Computersystem (198) nach Anspruch 14, wobei das Ausführen der Anomalieanalyse und das Identifizieren derjenigen Betriebsparameter (112), deren Werte von den bestimmten ein oder mehreren Anomalien umfasst sind, durch den ersten Server (100) erfolgt und die identifizierten Betriebsparameter (112) von dem ersten Server (100) an die weiteren Server (130, 160) der Mehrzahl von Servern (100, 130, 160) des verteilten Computersystems (198) weitergeleitet werden, wobei die weiteren Server (130, 160) die identifizierten Betriebsparameter (112) jeweils speichern, wobei das Überwachen der für die identifizierten Betriebsparameter (112) in den Log-Datensätzen (152, 182) protokollierten Werte jeweils durch den die entsprechenden Werte protokollierenden Server (100, 130, 160) der Mehrzahl von Servern (100, 130, 160) erfolgt, oder
wobei das Ausführen der Anomalieanalyse, das Identifizieren derjenigen Betriebsparameter (112), deren Werte von den bestimmten ein oder mehreren Anomalien umfasst sind, und das Überwachen der für die identifizierten Betriebsparameter (112) in den Log-Datensätzen (152, 182) protokollierten Werte durch den ersten Server (100) erfolgt, wobei auf die Vorhersage des bevorstehenden wiederholten Auftretens der Funktionsstörung (110) hin durch den ersten Server (100) ein oder mehrere Server (100, 130, 160) der Mehrzahl von Servern (100, 130, 160) bestimmt werden, bei welchen das wiederholte Auftreten der Funktionsstörung (110) bevorsteht.

Fig. 1

Fig. 2

Fig. 3

Auswahl 1
Betriebsparameter: X
Wert ($x_0$): 21,5

Datenbank

123

Feldindex – Betriebsparameter X

124

| Wert | Zeit |
|------|------|
| 21.5 | 15:46:11 |
| 21.5 | 16:50:38 |
| 21.5 | 17:02:10 |
| 21.5 | 17:09:24 |
| 22.0 | 13:51:30 |

$\Delta t_i$

120

Log-Datensätze

Feldindex – Betriebsparameter Y

125

| Wert | Zeit |
|------|------|
| 4.5 | 15:56:47 |
| 5.0 | 16:50:38 |
| 5.0 | 17:05:21 |
| 5.5 | 15:46:11 |
| 5.5 | 15:52:31 |

$\Delta t_i$

| BP | Wert |
|----|------|
| X | |
| Y | |
| Z | |
| ⋮ | |
| Z | |
| T | |

| BP | Wert |
|----|------|
| X | |
| Y | |
| Z | |
| ⋮ | |
| Z | |
| T | |

| BP | Wert |
|----|------|
| X | |
| Y | |
| Z | |
| ⋮ | |
| Z | |
| T | |

| BP | Wert |
|----|------|
| X | 21.5 |
| Y | 5.0 |
| Z | 673 |
| ⋮ | ⋮ |
| Z | 0.017 |
| T | 16:51:30 |

Auswahl 2
Betriebsparameter: Y
Wert ($y_0$): 5,0

122

Fig. 4

Fig. 5

| Datum   | 14.1.2022 | 15.1.2022 | 16.1.2022 | 17.1.2022 |
|---------|-----------|-----------|-----------|-----------|
| Abstand | 1826      | 1831      | 1814      | 1829      |

$\Delta t_{i-1}$

| Datum   | 14.1.2022 | 15.1.2022 | 16.1.2022 | 17.1.2022 |
|---------|-----------|-----------|-----------|-----------|
| Abstand | 1896      | 2078      | 1873      | 1896      |

$\Delta t_i$

| Datum   | 14.1.2022 | 15.1.2022 | 16.1.2022 | 17.1.2022 |
|---------|-----------|-----------|-----------|-----------|
| Abstand | 1817      | 1852      | 1824      | 1835      |

$\Delta t_{i+1}$

Fig. 6

| Protokollieren Log-Daten | 200 |
| Erfassen Funktionsstörung | 202 |
| Ausführen Anomalieanalyse | 204 |
| Identifizieren Betriebsparameter | 206 |
| Überwachen Log-Daten | 208 |

Fig. 7

Überwachen Log-Daten <u>300</u>

Erfassen Anomalie <u>302</u>

NEIN

JA

Vorhersagen Funktionsstörung <u>304</u>

Ausgeben Warnhinweis <u>306</u>

Ausführen zugeordnete Gegenmaßnahmen <u>308</u>

Fig. 8

Europäisches
Patentamt

European
Patent Office

Office européen
des brevets

# EUROPÄISCHER RECHERCHENBERICHT

**Nummer der Anmeldung**

**EP 23 20 1000**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2021 104735 A1 (BUNDESDRUCKEREI GMBH [DE]) 1. September 2022 (2022-09-01) | 1,2, 5-11,14, 15 | INV. G06F11/00 G06F11/07 |
| A | * das ganze Dokument * <br> * Zusammenfassung * <br> * Absätze [0018], [0021] – [0024], [0027], [0030], [0053] – [0069], [0074] – [0079], [0089], [0092] – [0096] * <br> * Ansprüche 1-23 * <br> ----- | 3,4,12, 13 | |

**RECHERCHIERTE SACHGEBIETE (IPC)**

G06F

Der vorliegende Recherchenbericht wurde für alle Patentansprüche erstellt

| Recherchenort | Abschlußdatum der Recherche | Prüfer |
|---|---|---|
| München | 19. Februar 2024 | Salsa, Francesco |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 20 1000

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-02-2024

| Im Recherchenbericht angeführtes Patentdokument | Datum der Veröffentlichung | Mitglied(er) der Patentfamilie | Datum der Veröffentlichung |
|---|---|---|---|
| DE 102021104735 A1 | 01-09-2022 | DE 102021104735 A1 | 01-09-2022 |
| | | EP 4298521 A1 | 03-01-2024 |
| | | WO 2022179996 A1 | 01-09-2022 |

Für nähere Einzelheiten zu diesem Anhang : siehe Amtsblatt des Europäischen Patentamts, Nr.12/82

EPO FORM P0461